(19) Europäisches Patentamt
European Patent Office
Office européen des brevets

(11) **EP 1 784 757 B1**

## (12) EUROPEAN PATENT SPECIFICATION

(45) Date of publication and mention
of the grant of the patent:
**17.10.2012 Bulletin 2012/42**

(21) Application number: **05767548.0**

(22) Date of filing: **29.07.2005**

(51) Int Cl.:
*G06K 9/52* (2006.01)        *G07D 7/00* (2006.01)
*G07D 7/20* (2006.01)        *G07D 7/12* (2006.01)
*G06K 1/12* (2006.01)

(86) International application number:
**PCT/GB2005/002989**

(87) International publication number:
**WO 2006/016112 (16.02.2006 Gazette 2006/07)**

(54) **AUTHENTICITY VERIFICATION METHODS, PRODUCTS AND APPARATUSES**

AUTHENTIZITÄTS-VERIFIKATIONSVERFAHREN, PRODUKTE UND VORRICHTUNGEN

PROCEDES, PRODUITS ET INSTRUMENTS DE VERIFICATION D'AUTHENTICITE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.08.2004 GB 0418178**
**13.08.2004 US 601219 P**

(43) Date of publication of application:
**16.05.2007 Bulletin 2007/20**

(73) Proprietor: **Ingenia Holdings Limited
Tortola (VG)**

(72) Inventor: **COWBURN, Russell P.
Cambridge
CB3 0HE (GB)**

(74) Representative: **Meldrum, David James et al
D Young & Co LLP
120 Holborn
London EC1N 2DY (GB)**

(56) References cited:
**EP-A- 0 278 058        EP-A- 0 334 201
EP-A- 1 273 461        EP-A- 1 418 542
EP-A1- 1 587 030        WO-A-00/45344
WO-A1-2004/066207        DE-A1- 19 632 269
US-A- 5 059 776**

## Description

## BACKGROUND OF THE INVENTION

The invention relates to security methods, more especially verification of authenticity of an article such as a personal identification (ID) card, banknote, vendable product, document or other item made from fibrous sheet material such as paper or cardboard.

Many traditional authentication security systems rely on a process which is difficult for anybody other than the manufacturer to perform, where the difficulty may be imposed by expense of capital equipment, complexity of technical know-how or preferably both. Examples are the provision of a watermark in bank notes and a hologram on credit cards or passports. Unfortunately, criminals are becoming more sophisticated and can reproduce virtually anything that original manufacturers can do.

Because of this, there is a known approach to authentication security systems which relies on creating security tokens using some process governed by laws of nature which results in each token being unique, and more importantly having a unique characteristic that is measurable and can thus be used as a basis for subsequent verification. According to this approach tokens are manufactured and measured in a set way to obtain a unique characteristic. The characteristic can then be stored in a computer database, or otherwise retained. Tokens of this type can be embedded in the carrier article, e.g. a banknote, passport, ID card, important document. Subsequently, the carrier article can be measured again and the measured characteristic compared with the characteristics stored in the database to establish if there is a match.

Within this general approach it has been proposed to use different physical effects. One physical effect that has been considered in a number of prior art documents [1-4] is to use laser speckle from intrinsic properties of an article, typically in the form of a special token, to provide a unique characteristic. According to these techniques a large area, such as the whole of a special token, is illuminated with a collimated laser beam and a significant solid angle portion of the resultant speckle pattern is imaged with a CCD, thereby obtaining a speckle pattern image of the illuminated area made up of a large array of data points.

More recently a further laser speckle based technique has been developed [5] in which the unique characteristic is obtained by scanning a focused laser beam over the article and collecting many data points, typically 500 or more, from light scattered from many different parts of the article to collect a large number of independent data points. By collecting a large number of independent signal contributions specific to many different parts of the article, a digital signature can be computed that is unique to the area of the article that has been scanned. This technique is capable of providing a unique signature from the surfaces of a wide variety of articles, including untreated paper, cardboard and plastic.

An important application of this technique is security verification from a database of stored signatures, referred to as the "master database" in the following. For example, in a perfumery factory, each perfume bottle box can be scanned by a reader to obtain a signature, and these signatures are entered into a master database. The master database includes a signature from every article, i.e. box of perfume, produced. Later, for field verification, a reader can be used to scan any box of perfume to obtain a signature, and this signature is compared with the master database to establish whether there is a matching signature held in the master database. If there is no match, the article is considered to be counterfeit. If there is a match, then the article is considered to be genuine.

In many applications, for example those relating to national security, civil documentation or high volume branded goods, the number of signatures stored in the master database may be very large. The number of entries may be perhaps millions, tens of millions or even hundreds of millions. For example, this would be the case if the scheme is used for passport or driving licence verification for a populous country.

For most if not all applications, it is necessary that the search of the master database can be carried out in a reasonable time. What is reasonable will vary from application to application, but for many applications a maximum reasonable time will only be a few seconds. This may become difficult to achieve if the number of articles becomes large.

It would therefore be desirable to be able to perform a different kind of verification of articles based on a property that is generic to all genuine articles, possibly without reference to a database. While this would not be as secure as a positive verification process based on a unique property of each article, it would be easier to perform and provide a negative test that picked out many clear forgeries or fakes. For example, it could be used as a pre-screening test before verifying based on a unique signature. Similar verification processes are disclosed in the following documents.

EP 1587030A1 and WO 2004/066207A1 describe an apparatus and method for analysing an article made of paper using a scanner with a coherent elongate beam and a plurality of detectors.

WO00/45344 describes a substrate on which a security document is to be printed. Said substrate having physically formed therein identification features which are invisible to the eye but are repetitive so as to be detectable by computer based equipment reading a document printed on said substrate.

EP1418542A1 relates to watermarking a security document. According to the disclosure, a matrix code as a data carrier for readable data and a graphical structure for the chosen watermark subject are combined using conventional computers for image processing. The combination of the matrix code and the graphical structure which is the new image is reproduced as a watermark in the security document using conventional methods for producing watermarks.

EP1273461A2 relates to a series of security documents, preferably bank notes, comprising several different denominations each representing a different value , provided with a watermark in the form of a barcode, the bars for each denomination being at another angle to an axis.

EP0278058 describes an apparatus for checking the authenticity of documents. In documents for checking, deterministic features are hidden under stochastic features in a feature section. For this purpose, image areas are used which are located in or in the vicinity of the real image plane of the optical system used for imaging the feature section. The influence of the stochastic feature creates blurred images which can only be evaluated by means of aids. As evaluation methods, the intensity comparison method or, in the case of a periodic deterministic feature, the Fourier analysis method are used, for example, for establishing the authenticity of the deterministic feature.

## SUMMARY OF THE INVENTION

The invention is directed at a different apparatus and method of analysing an article made of paper or cardboard according to independent claims 1 and 8.

During initial development of the applicant's laser speckle based security technique, the applicant was surprised to discover that the calculated probability of a random match between the characteristic signals measured for two pieces of paper taken from the same ream was not as low as would be expected from theory. In one particular experiment, calculations indicated that there was approximately a 1 in $10^6$ chance of the supposedly random characteristic signatures of two given pieces of paper matching to within a stated error threshold. However, during trials, matches of this quality were in practice being observed several times per day. This indicated that the characteristic signatures were not entirely random and contained a component of information which was constant from one sheet of paper to the next.

Subsequent investigations revealed that the paper gives rise to an artefact signal which is responsible for the increased chance of a random incorrect match between pieces of paper. Therefore, in order to reduce the possibility of false identification of articles, the applicant's apparatus was previously operated to remove the effect of the artefact signals.

The artefact signals themselves appear as one or more frequency components found in the output signal derived from a photodetector as the paper surface is scanned. The period and number of the frequency components found any particular artefact signal depends upon the orientation of the scanning beam with respect to the paper surface.

Following a review of the paper making process, the applicant currently believes that the artefact signals derive from the screens used to remove water from paper pulp during a drying process [6, 7, 8, 9, 10, 11, 12, 13]. Such screens are typically formed using a wire mesh having regular spacing. Whilst such screens are typically designed in an attempt not to leave any visible markings on the paper, it appears that the screens still impart a significant imprint to the paper during the ordinary paper manufacturing process. The applicants believe that the artefact signals they are able to detect are due to the imprints imparted by the screens.

Further experiments have revealed that the artefact signals are often common to sheets of paper taken from the same ream. Additionally, investigation has revealed that the artefact signals are stable over time and remain present even when a particular sheet of paper is damaged by crumpling, rubbing etc. However, interestingly it has been found that paper from different suppliers generally possess different artefact signals.

It thus appears that the artefact signals carry useful information, since they appear to be characteristic of any paper made using a particular screen, or screen product type. Moreover, given the large variety of screen types, materials and shapes this effect appears to be suitable to provide a class signature for identifying paper from a particular source, i.e. paper made using a particular screen or screen type.

By using the artefact signals to provide a class signature, the manufacturing source of the paper can be identified. Although this provides only a fairly low level of security on its own, it provides a useful technique for performing a negative test on authenticity, since a fail clearly indicates that the article cannot be genuine regardless of its unique individual signature.

Moreover, use of this technique ensures that not every sheet of paper that is manufactured has to be scanned to provide a predetermined characteristic signature. This technique can thereby avoid or reduce the need for storage of a large data set of such predetermined characteristic signatures. Additionally, to obtain the class signature, paper can be scanned anywhere on its surface. This helps reduce the need for accurate registration of an article being scanned with a scanning beam.

Hence, according to a first example of the present disclosure, there is provided an apparatus for analysing an article made of paper or cardboard placed in a reading volume. The apparatus comprises a scanner for scanning an article with an optical beam, a detector arrangement for collecting a set of data points from signals obtained when the beam scans the reading volume, and a data acquisition and processing module for processing the set of data points so as to determine whether the article possesses a predetermined class signature that identifies articles of a known generic type from the intrinsic properties of the article. Different ones of the data points relate to signals obtained at different times during the scan. In various examples, the source is mounted to direct the coherent beam towards the reading volume so that the coherent beam will strike an article with near normal incidence. In various examples the scanner is configured to project the beam towards the article at near normal incidence.

Periodic variations in the intrinsic properties of the article may give rise to an artefact signal that can be used to provide a class signature. In various examples the class signature is obtained by performing a mathematical transform of the set of data points to determined the class signature. A match between the measured class signature and a predetermined class signature is then indicative that the article is of the generic type associated with the class of the predetermined class signature. In various examples, one or more Fourier Transformations (FTs) of the set of data points are calculated in order to identify an artefact signal. The FT spectrum, or one or more peaks of it, can then be used as the class signature.

Selected subsets of the set of data points may also be analysed. For example, such subsets may be analysed in order to determine which subset gives rise to the largest amplitude peak in a transformed set of data points. Such subsets may include data points that correspond to scans performed on an article at various orientations. For example, a subset may comprise data points obtained over an arc forming part of a rotational scan.

Predetermined class signatures may be provided in a database that can be remotely located or included in a hand-held reader. Since the apparatus uses class signatures, the database can be relatively small. The predetermined class signatures can also be encrypted for enhanced security. By matching class signatures to predetermined class signatures, apparatus incorporating this feature can provide initial security screening of articles made of paper/card according to manufacturer/machine etc. For example, the apparatus can indicate to an operator that an article is not made of US passport paper, not made of UK banknote paper etc.

The apparatus may additionally comprise an encoder/decoder module for measuring the relative position of the beam and the article during the scan. The data acquisition and processing module may also be further operable to linearise the set of data points prior to determining a class signature by using relative measured position information obtained from the encoder/detector module. By modifying the set of data points in order to ensure that consecutive data points in the set are equally-spaced with respect to time or position of their acquisition during the scan, non-linear motion artefacts introduced by the scanning process can be largely removed.

The detector arrangement may include a plurality of detector channels arranged and configured to sense scatter from respective different parts of the reading volume. Each such detector channel can provide a set of time sequence (or, equivalently, linear scan position sequence) data that is used to determine a respective class signature. Two or more such respective class signatures can be averaged to provide a measurement of the class signature having an improved signal to noise ratio. Since multiple detectors are used in various embodiments for determining unique characteristic responses, incorporation of averaging functionality does not significantly increase the cost or complexity of the apparatus.

In certain examples, different ones of the data points are obtained by linear scanning of the beam in the reading volume. Scanning entails relative movement between the beam and the reading volume. Use of a linear scan is beneficial as it is mechanically simple and relatively inexpensive to implement. A linear scan is also useful where the orientation of imprints that give rise to a class signature is predetermined (for example, where paper is always cut in a particular way with respect to the screen on which it is manufactured). Linear scans are generally relatively fast when determining a class signature, since the set of data points that is generated only requires minimal processing in order to extract that class signature.

For various other examples different ones of the data points are obtained by rotational scanning of the beam in the reading volume. For these examples, there is no need to accurately position articles when reading a class signature as subsequent processing of the data points can be used to determine the class signature. Advantageously, where rotational scanning is performed using a portable hand-held scanner, such a scanner may be placed anywhere on the article. Hand-held scanners of this type are thus of use to personnel, such as customs officers, who may need to perform a rapid *in situ* scan of a sample set articles from a large consignment of articles.

Various examples of the present disclosure are operable to perform both a scan to verify a class signature and a scan to verify a unique characteristic signature. Verification of a characteristic signature may conditionally follow verification of the class signature or may be mandatory.

According to a second example of the present disclosure, there is provided a method of analysing ; an article made of paper or cardboard. The method comprises placing an article in a reading volume, scanning the article with an optical beam, collecting a set of data points from signals obtained when the beam scans the reading volume, and processing the set of data points to determine whether the article possesses a predetermined class signature that identifies articles of a known generic type from the intrinsic properties of the article. Different ones of the data points relate to signals obtained at different times during the scan.

The method according to this example may further comprise method steps for performing one or more functions/operations that may be implemented or provided by the apparatus according to the first example: herein described.

The apparatus according to the first example may be used to implement the method according to the second example of the disclosure. For example, the apparatus according to the first example may be used to verify authenticity of an article by performing a method of analysing the article. The apparatus may be used to check whether a particular article has an expected class signature. For example, it may be expected that a perfume box has a class signature derived from an artefact signal arising from an imprint of a rectangular grid with 250x400 micrometre spacing, or that a banknote has a class signature derived from an artefact signal arising from an imprint of an equal-sided hexagonal grid with 300 micrometre parallel side separation. It is also possible to use class signatures that derive from complex-shaped imprints. For example, class signatures may derive from imprints that are heart-shaped, star-shaped, etc.

Moreover, the apparatus may be used to recover information that is deliberately encoded into paper/cardboard by imprinting a predetermined pattern. Such a pattern need not be visible. For example, information may be recovered from the class signature which is encoded into the paper by way of a bespoke screen used during paper manufacture.

According to a third example of the present disclosure, there is provided a screen for manufacturing a paper or cardboard article. The screen comprises a plurality of elements arranged and configured to impart a bespoke imprint pattern to a paper or cardboard article for providing a predetermined class signature that identifies the article as being of a known generic type. The screen is for the deliberate imparting of the imprint to the article so as to provide a predetermined class signature. The screen is a bespoke screen that provides imprints whose pattern is not currently found in screens used in the paper making industry. Such bespoke screens may further provide complex-shaped imprint patterns.

As indicated, this example relates to the deliberate imparting of an imprint to the article so as to provide a predetermined class signature. The screen may be any means that imparts a desired imprint to the paper or cardboard during or after it is manufactured. For example, the screen can be a perforated surface or may be composed of plates, wires etc.

A conventional screen comprises elements that are spatially arranged so as to impart a periodic imprint pattern to the paper or cardboard. By using a periodic pattern, a scan to determine the class signature can be performed anywhere on the paper. Such a periodic imprint pattern also provides the data points with a strong frequency component that is suitable for detection using FT or other analysis techniques.

There is however also the possibility of making specially patterned screens to take advantage of the imprinting effect to convey a spatial modulation of the surface structure of the paper following a variety of functional forms, symmetries etc.

The spatial modulation may be used to encode data such as, for example, binary data bits. Spatial modulation may, for example, by provided to encode data using chirped modulation, super-periodicity modulation, amplitude modulation, phase shift keying modulation, or frequency shift keying modulation.

The imprint pattern can incorporate complex shapes. For example, asymmetric shapes such as stars, hearts etc. or shapes having various varying degrees of symmetry may be incorporated to provide multiple frequency components into an artefact signal. Use of complex multiple frequency components for class signature recognition makes copying harder and also increases the number of possible class signatures that can be recognised.

One or more bit sequences may also be encoded into the paper or cardboard by using the imprint pattern for encoding. This provides numerous possibilities for incorporating information into the paper or cardboard. For example, information identifying a manufacturer, the machine the paper was made on, encrypted information relating to the expected class signature etc. can be encoded within the paper itself. Moreover, as previously indicated, this information can be robustly and invisibly stored.

According to a fourth example of the present disclosure, there is provided a method of making a paper or cardboard article including a bespoke imprint pattern. The method according to this example comprises using a screen according to the third example to impart a bespoke imprint pattern.

According to a fifth example of the present disclosure, there is provided a paper or cardboard article comprising a bespoke imprint pattern for providing a class signature for identifying the article as belonging to a known generic type. The imprint pattern may not be visible. For example, the imprint pattern may not be visible to the naked eye.

The bespoke imprint pattern of the paper/cardboard may be periodic. In various examples, the imprint pattern incorporates spatial modulation provided according to one or more of the following schemes: chirped modulation, super-periodicity modulation, amplitude modulation, phase shift keying modulation, and frequency shift keying modulation. It is also possible to use an imprint pattern that encodes one or more bit sequences into the paper or cardboard

The main examples are described in relation to the Figures. These examples can be used to detect a class signature and optionally also a unique characteristic signature. The detector channels may be made up of discrete detector components in the form of simple phototransistors when a characteristic signature is to be detected. Other simple discrete components could be used such as PIN diodes or photodiodes. Integrated detector components, such as a detector array could also be used, although this would add to the cost and complexity of the devices.

From initial experiments which modify the illumination angle of the beam on the article to be scanned, it also seems to be important in practice that beam is incident approximately normal to the surface being scanned in order to obtain a characteristic that can be repeatedly measured from the same surface with little change, even when the article is degraded between measurements.

It can therefore be advantageous to mount the source so as to direct the beam onto the reading volume so that it will strike an article with near normal incidence. By near normal incidence means ±5, 10 or 20 degrees. Alternatively, the beam can be directed to have oblique incidence on the articles. This will usually have a negative influence in the case that the beam is scanned over the article.

It is also noted that in the readers described in the detailed description, the detector arrangement is arranged in reflection to detect radiation back scattered from the reading volume. However, if the article is transparent, the detectors could be arranged in transmission.

In one group of examples, the data acquisition and processing module is operable to further analyse the data points to identify a signal component that follows a predetermined encoding protocol and to generate a predetermined characteristic signature therefrom. The characteristic of the predetermined encoding protocol is envisaged to be based on contrast, i.e. scatter signal strength, in most examples. In particular, a conventional bar code protocol may be used in which the bar code is printed or otherwise applied to the article in the form of stripes in the case of a 1D barcode or more complex patterns for a 2D bar code. In this case, the data acquisition and processing module can be operable to perform a comparison to establish whether the predetermined characteristic signature matches the characteristic signature obtained by reading an article that has been placed in the reading volume. Consequently, an article such as a piece of paper, can be marked to bear a digitally signed version of its own characteristic signature, such as a barcode. The predetermined characteristic signature should be obtained from the article's characteristic signature with a one-way function, i.e. using an asymmetric encryption algorithm that requires a private key. This acts as a barrier to an unauthorised third party with a reader, who wants to read fake articles and print on them a label that represents the reader's scan according to the encryption scheme. Typically the bar code label or other mark would represent a cryptogram decipherable by a public key, and the private key would be reserved for the authorised labellor party.

A database of signatures, such as the predetermined characteristic signature or a class signature, may be provided. The data acquisition and processing module may be operable to access the database and perform a comparison to establish whether the database contains a match to the characteristic signature or class signature of an article that has been placed in the reading volume. The database may be part of a mass storage device that forms part of the reader apparatus, or may be at a remote location and accessed by the reader through a telecommunications link. The telecommunications link may take any conventional form, including wireless and fixed links, and may be available over the Internet. The data acquisition and processing module may be operable, at least in some operational modes, to allow a characteristic signature or class signature to be added to the database if no match is found. This facility will usually only be allowed to authorised persons for obvious reasons.

When using a database, in addition to storing a signatures, it may also be useful to associate the signatures in the database with other information about the article such as a scanned copy of the document, a photograph of a passport holder, details on the place and time of manufacture of the product, or details on the intended sales destination of vendable goods (e.g. to track grey importation).

Reader apparatuses as described above may be used in order to populate a database with characteristic signatures by reading a succession of articles, e.g. in a production line, and/or in order subsequently to verify authenticity of an article, e.g. in field use.

The present disclosure allows identification of articles made of a variety of different kinds of generally compacted fibrous sheet materials, such as paper and cardboard.

Various examples allow it to be ascertained whether an article has been tampered with. This is possible if adhesively bonded transparent films, such as adhesive tape, cover the scanned area used to create the characteristic signature. If the tape must be removed to tamper with the article, e.g. to open a packaging box, the adhesive bonding can be selected so that it will inevitably modify the underlying surface. Consequently, even if similar tape is used to reseal the box, this will be detectable.

By paper or cardboard we mean any article made using a wood pulp process. The paper or cardboard may be treated with coatings or impregnations or covered with transparent material, such as cellophane. If long-term stability of the surface is a particular concern, the paper may be treated with an acrylic spray-on transparent coating, for example.

The present disclosure is considered to be particularly useful for paper or cardboard articles from the following list of examples:

    1. valuable documents such as share certificates, banknotes, bills of lading, passports, intergovernmental treaties, statutes, driving licences, vehicle roadworthiness certificates, any certificate of authenticity

    2. any document for tracing or tracking purposes, e.g. envelopes for mail systems

    3. packaging of vendable products

4. brand labels on designer goods, such as fashion items

5. packaging of cosmetics, pharmaceuticals, or other products.

The present disclosure also allows identification of articles of a variety of different types, including packaging, documents, and clothing. The article may be contained in packaging, and optionally the packaging may be sealed in a tamper-proof manner. Alternatively, the packaging may be an appendage to the article, such as a tag secured with a connector that cannot be released without being visibly damaged. This may be especially useful for pharmaceutical products, cosmetic goods and perfume, and spare parts for aircraft or land or water vehicles, for example.

In summary, the characteristic signature or class signature can in some cases be obtained from something ancillary to a vendable product, such as its packaging, and in other cases obtained from the object itself, such as from surface structure of a document, or a vendable product. The examples of the present disclosure may find many practical applications, for example to control grey market importation or counterfeiting. For such applications, portable readers could be used by customs officers or trading standards officers.

The characteristic signature or class signature can be encoded as a digital signature for most applications. Typical sizes of a digitally encoded characteristic signature with current technology would be in the range 200 bits to 8k bits, where currently it is preferable to have a digital signature size of about 2k bits for high security. The class signature may be encoded using fewer bits than the characteristic signature since it provides a less secure mechanism for identifying articles. The digitally encoded signatures may themselves be encoded using an encryption algorithm.

**BRIEF DESCRIPTION OF THE DRAWINGS**

For a better understanding of the invention and to show how the same may be carried into effect reference is now made by way of example to the accompanying drawings in which:

Figure 1 is a schematic side view of a reader apparatus embodying the invention;

Figure 2 is a schematic perspective view showing how the reading volume of the reader apparatus is sampled n times by scanning an elongate beam across it;

Figure 3 is a block schematic diagram of the functional components of the reader apparatus;

Figure 4 is a perspective view of an embodiment of a reader apparatus showing its external form;

Figure 5 is a schematic perspective view of an alternative reader apparatus;

Figure 6A shows schematically in side view an alternative imaging arrangement for a reader not according to the invention based on directional light collection and blanket illumination;

Figure 6B shows schematically in plan view the optical footprint of a further alternative imaging arrangement for a reader not according to the invention in which directional detectors are used in combination with localised illumination with an elongate beam;

Figure 7A shows data a set of data points taken from a single photodetector after linearisation with the encoder signal;

Figure 7B shows a FT of the set of data points shown in Figure 7A;

Figure 8A shows how the amplitude of an FT peak varies as paper is rotated with respect to a scan direction;

Figure 8B shows how the wavelength of a strongest FT peak varies with angle as paper is rotated with respect to a scan direction;

Figure 9 shows a flow diagram showing how a class signature is measured from an article and authenticated or recorded;

Figure 10A shows raw data from a single photodetector using the reader of Figure 1 which consists of a photodetector signal and an encoder signal;

Figure 10B shows the photodetector data of Figure 10A after linearisation with the encoder signal and averaging the amplitude;

Figure 10C shows the data of Figure 10B after digitisation according to the average level;

Figure 11 is a flow diagram showing how a characteristic signature of an article is generated from a scan;

Figure 12 is a flow diagram showing how a signature of an article obtained from a scan can be verified against a signature database;

Figure 13A shows a rotary scanner for use in a rotary scanning apparatus for determining a class signature from an article made of paper or cardboard;

Figure 13B shows a lid for fitting to the housing of the rotary scanner shown in Figure 13A;

Figures 14A and 14B together illustrate a flow diagram showing how a class signature is measured from an article using a rotary scan and authenticated or recorded;

Figure 15 is a flow diagram showing how an apparatus according to an embodiment of the invention operates; and

Figures 16A to 16G schematically show various bespoke screens useful, in connection with the invention.

## DETAILED DESCRIPTION

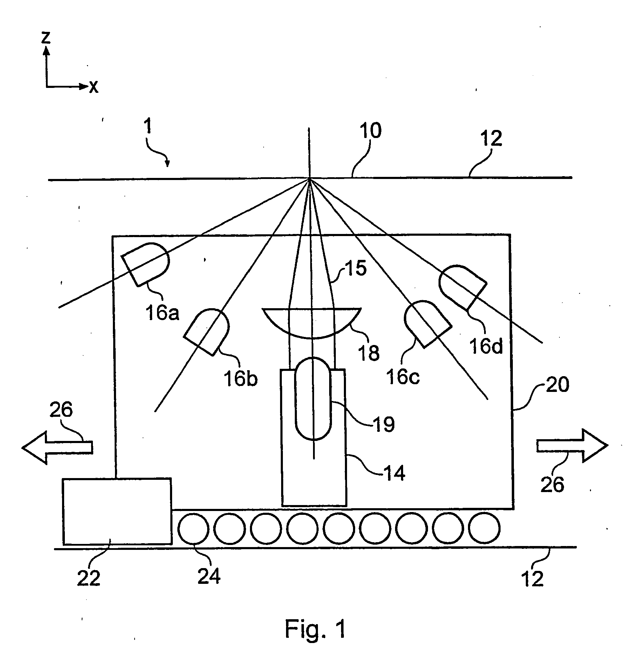

Figure 1 is a schematic side view of a reader apparatus 1 embodying the invention. The optical reader apparatus 1 is for measuring a class signature and a characteristic signature from an article (not shown) arranged in a reading volume of the apparatus. The reading volume is formed by a reading aperture 10 which is a slit in a housing 12. The housing 12 contains the main optical components of the apparatus. The slit has its major extent in the x direction (see inset axes in the drawing). The principal optical components are a laser source 14 for generating a coherent laser beam 15 and a detector arrangement 16 made up of a plurality of k photodetector elements, where k = 4 in this example, labelled 16a, 16b, 16c and 16d. The laser beam 15 is focused by a cylindrical lens 18 into an elongate focus extending in the y direction (perpendicular to the plane of the drawing) and lying in the plane of the reading aperture. In an example prototype reader, the elongate focus has a major axis dimension of about 2 mm and a minor axis dimension of about 40 micrometres. These optical components are contained in a subassembly 20. In the illustrated embodiment, the four detector elements 16a...d are distributed either side of the beam axis offset at different angles in an interdigitated arrangement from the beam axis to collect light scattered in reflection from an article present in the reading volume. In an example prototype, the offset angles are -70, -20, +30 and +50 degrees. The angles either side of the beam axis are chosen so as not to be equal so that the data points they collect are as independent as possible. All four detector elements are arranged in a common plane. The photodetector elements 16a..d detect light scattered from an article placed on the housing when the coherent beam scatters from the reading volume. As illustrated, the source is mounted to direct the laser beam 15 with its beam axis in the z direction, so that it will strike an article in the reading aperture at normal incidence.

Generally it is desirable that the depth of focus is large, so that any differences in the article positioning in the z direction do not result in significant changes in the size of the beam in the plane of the reading aperture. In an example prototype, the depth of focus is approximately 0.5 mm which is sufficiently large to produce good results.

The parameters, of depth of focus, numerical aperture and working distance are interdependent, resulting in a well known trade off between spot size and depth of focus.

A drive motor 22 is arranged in the housing 12 for providing linear scanning motion of the optics subassembly 20 via suitable bearings 24 or other means, as indicated by the arrows 26. The drive motor 22 thus serves to move the coherent beam linearly in the x direction over the reading aperture 10 so that the beam 15 is scanned in a direction transverse to the major axis of the elongate focus. Since the coherent beam 15 is dimensioned at its focus to have a cross-section in the xz plane (plane of the drawing) that is much smaller than a projection of the reading volume in a plane normal to the coherent beam, i.e. in the plane of the housing wall in which the reading aperture is set, a scan of the drive motor 22 will cause the coherent beam 15 to sample many different parts of the reading volume under action of the drive motor 22.

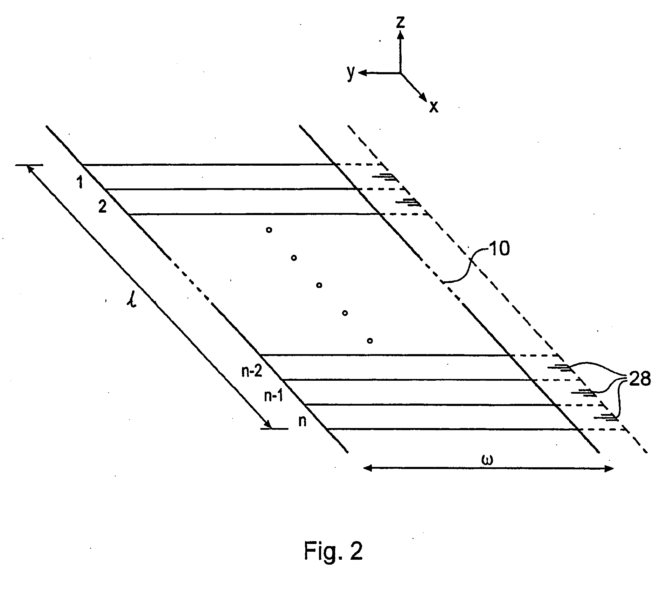

Figure 2 is included to illustrate sampling provided by scanning and is a schematic perspective view showing how the reading area is sampled n times by scanning an elongate beam across it. The sampling positions of the focused laser beam as it is scanned along the reading aperture under action of the drive is represented by the adjacent rectangles numbered 1 to n which sample an area of length '1' and width 'w'. Data collection is made so as to collect signal at each of the n positions as the drive is scanned along the slit. Consequently, a sequence of k x n data points are collected that relate to scatter from the n different illustrated parts of the reading volume. Each detector k thus has an associated sequence of n data points obtained at different times as the coherent beam scans the reading volume.

Also illustrated schematically are distance marks 28 formed on the underside of the housing 12 adjacent the slit 10 along the x direction, i.e. the scan direction. An example spacing between the marks in the x-direction is 300 micrometres. These marks are sampled by a tail of the elongate focus and provide for linearisation of the data in the x direction, as is described in more detail further below. The measurement is performed by an additional phototransistor 19 which is a directional detector arranged to collect light from the area of the marks 28 adjacent the slit.

In an alternative embodiment, the marks 28 are read by a dedicated encoder emitter/detector module 19 that is part of the optics subassembly 20. Encoder emitter/detector modules are used in bar code readers. For example, we have used an Agilent HEDS-1500 module that is based on a focused light emitting diode (LED) and photodetector. The module signal is fed into the PIC ADC as an extra detector channel.

Typically, imprinted features provided on paper during the manufacturing process have a periodicity of between about 200 $\mu$m to 600 $\mu$m. Sampling of the data points should thus be made at least every 100 $\mu$m or less in order to detect the smallest likely imprinted features that may be present. In one mode of operation, the apparatus can perform a swift but relatively coarse initial scan to obtain one data point every 90 $\mu$m or so in order to populate the sets of data points for the k detectors. One or more of the sets of data points can then be analysed using the techniques described below to determine the class signature. If a match to the class signature is found the apparatus may then seek to measure the unique characteristic signature of the individual article.

Subsequently, or alternatively, a finer resolution scan may be made. This scan can be used to measure the characteristic signature, or both the class signature and the characteristic signature. For example, with an example minor dimension of the focus of 40 micrometers, and a scan length in the x direction of 2 cm, n=500, giving 2000 data points with k = 4. A typical range of values for k x n depending on desired security level, article type, number of detector channels 'k' and other factors is expected to be 100 < k x n < 10,000. It has also been found that increasing the number of detectors k also improves the insensitivity of the measurements to surface degradation of the article through handling, printing etc. In practice, with the prototypes used to date, a rule of thumb is that the total number of independent data points, i.e. k x n, should be 500 or more to give an acceptably high security level with a wide variety of surfaces.

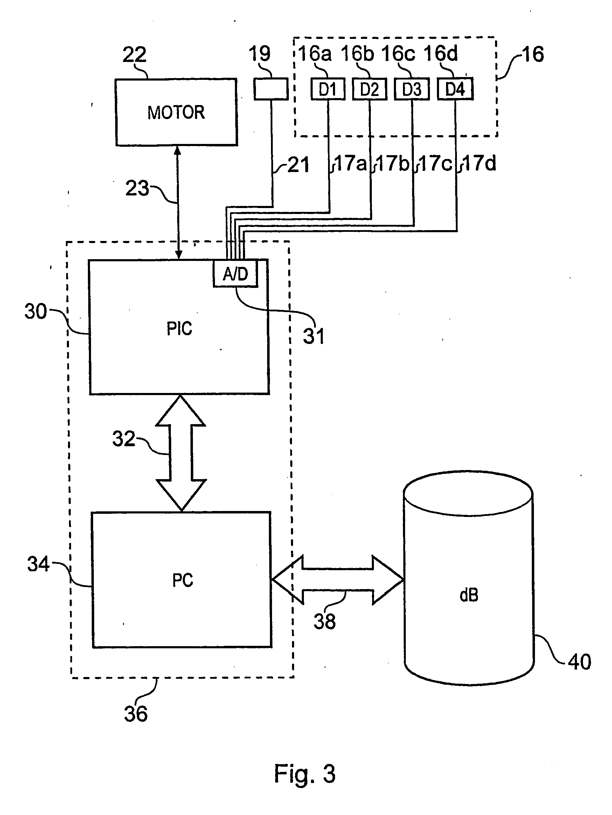

Figure 3 is a block schematic diagram of the functional components of the reader apparatus. The motor 22 is connected to a programmable interrupt controller (PIC) 3 0 through an electrical link 23. The detectors 16a...d of the detector module 16 are connected through respective electrical connection lines 17a...d to an analogue-to-digital converter (ADC) that is part of the PIC 30. A similar electrical connection line 21 connects the marker reading detector 19 to the PIC 30. It will be understood that optical or wireless links may be used instead of, or in combination with, electrical links. The PIC 30 is interfaced with a personal computer (PC) 34 through a serial connection 32. The PC 34 may be a desktop or a laptop. As an alternative to a PC, other intelligent devices may be used, for example a personal digital assistant (PDA) or a dedicated electronics unit. The PIC 30 and PC 34 collectively form a data acquisition and processing module 36 for determining a signature of the article from the set of data points collected by the detectors 16a...d. The PC 34 has access through an interface connection 38 to a database (dB) 40. The database 40 may be resident on the PC 34 in memory, or stored on a drive thereof. Alternatively, the database 40 may be remote from the PC 34 and accessed by wireless communication, for example using mobile telephony services or a wireless local area network (LAN) in combination with the internet. Moreover, the database 40 may be stored locally on the PC 34, but periodically downloaded from a remote source.

The database 40 contains a library of previously recorded class and characteristic signatures. In a variant upon this embodiment, the database 40 only contains a library of predetermined class signatures. The PC 34 is programmed so that in use it accesses the database 40 and performs a comparison to establish whether the database 40 contains a match to the signature of the article that has been placed in the reading volume. The PC 34 may also be programmed to allow a signature to be added to the database if no match is found. This mode of use is reserved for use by authorised users and may be omitted from systems that are to be used in the field exclusively for verification purposes.

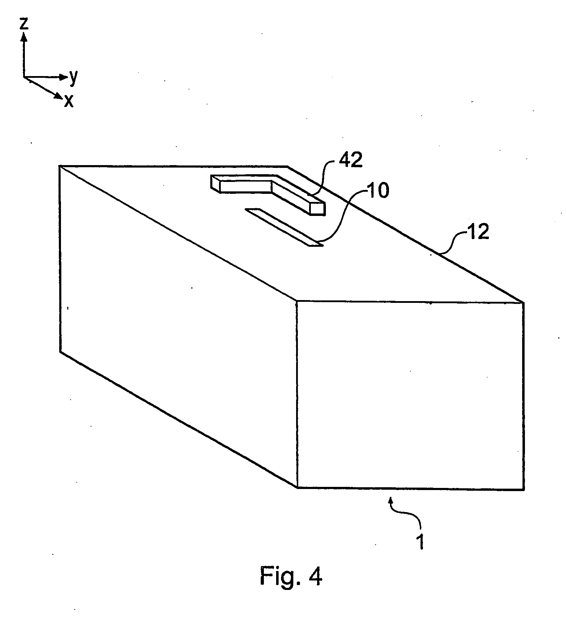

Figure 4 is a perspective view of the reader apparatus 1 showing its external form. The housing 12 and slit-shaped reading aperture 10 are evident. A physical location aid 42 is also apparent and is provided for positioning an article of a given form in a fixed position in relation to the reading aperture 10. In the illustrated example, the physical location aid 42 is in the form of a right-angle bracket in which the corner of a document or packaging box can be located. This ensures that the same part of the article can be positioned in the reading aperture 10 whenever the article needs to be scanned. A simple angle bracket or equivalent, is sufficient for articles with a well-defined corner, such as sheets of paper, passports, ID cards and packaging boxes.

A document feeder could be provided to ensure that the article placement was consistent. For example, the apparatus could follow any conventional format for document scanners, photocopiers or document management systems. For packaging boxes, an alternative would be to provide a suitable guide hole, for example a rectangular cross-section hole for accepting the base of a rectangular box or a circular cross-section hole for accepting the base of a tubular box (i.e. cylindrical box).

A physical location aid 42 is provided where the reader apparatus 1 checks both class signatures and characteristic signatures. However, this feature or its functional equivalent need not be present in variants of the reader apparatus 1 which only perform a check for class signatures.

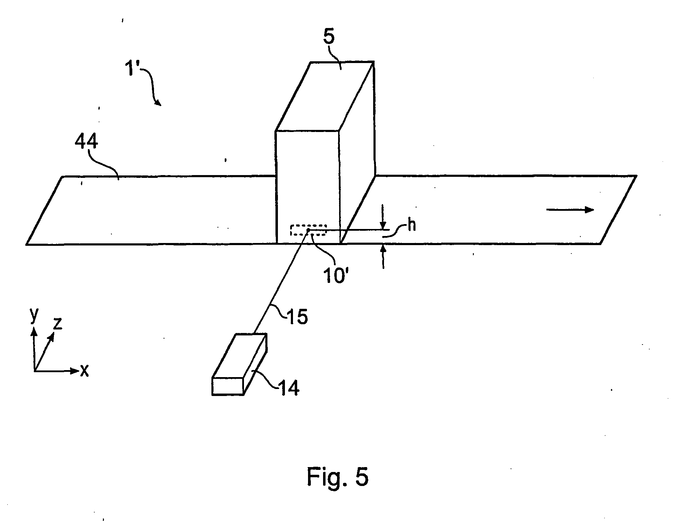

Figure 5 is a schematic perspective view of an alternative embodiment showing a reader apparatus 1' intended for screening batches of articles. The reader is based on a conveyor belt 44 on which articles of packaging can be placed, only one article 5 being illustrated for simplicity of representation. A reading area 10' on the article 5 is scanned by a static laser beam 15 as the article 5 passes on the conveyor belt 44. The laser beam 15 is generated by a laser source 14 arranged fixed in position beside the conveyor belt 44. The laser source 14 has an integral beam focusing lens (not shown) for producing a pencil-like near-collimated beam that travels in the z direction (i.e. horizontal to the floor) to pass over the conveyor belt 44 at a height 'h', thereby intersecting with the article 5 at a height 'h' to scan over the reading area 10'. The beam cross-section may be a spot, i.e. circular (e.g. produced with integral spherical lens), or a line extending in the y direction (e.g. produced with integral cylindrical lens). Although only one article is shown, it will be appreciated that a stream of similar articles can be conveyed and scanned in succession as they pass through the beam 15.

The functional components of the conveyor-based reader apparatus are similar to those of the stand-alone reader apparatus described further above. The only difference of substance is that the article is moved rather than the laser beam, in order to generate the desired relative motion between scan beam and article.

It is envisaged that the conveyor-based reader can be used in a production line or warehouse environment for populating a database with class/characterisation signatures by reading a succession of articles. As a control, each article may be scanned again to verify that the recorded signature can be verified. This could be done with two systems operating in series, or one system through which each article passes twice. Batch scanning could also be applied at point of sale (POS), or using a reader apparatus that was based on POS equipment components.

The above-described embodiments of the invention are based on localised excitation with a coherent light beam of small cross-section in combination with detectors that accept light signal scattered over a much larger area that includes the local area o excitation. Not according to the invention, it is possible to design a functionally almost equivalent optical system which is instead based on directional detectors that collect light only from localised areas in combination with excitation of a much larger area.

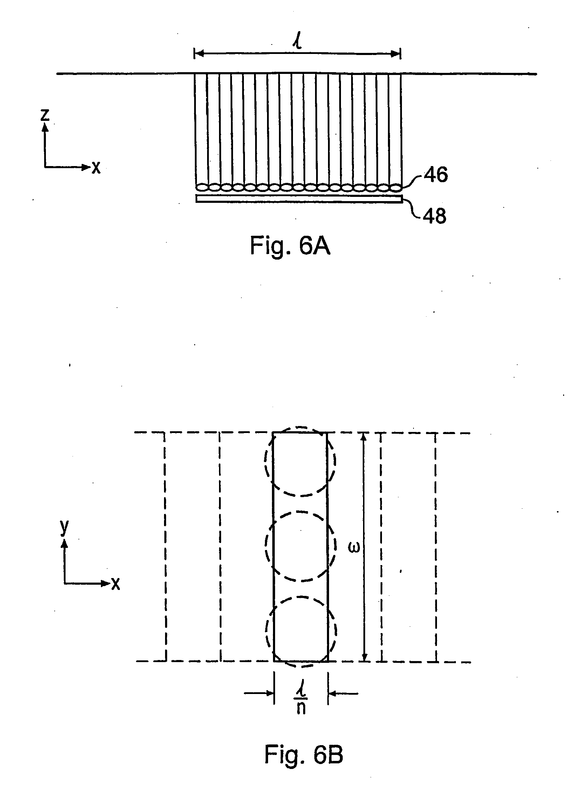

Figure 6A shows schematically in side view such an imaging arrangement for a reader not according to the invention which is based on directional light collection and blanket illumination with a coherent beam. An array detector 48 is arranged in combination with a cylindrical microlens array 46 so that adjacent strips of the detector array 48 only collect light from corresponding adjacent strips in the reading volume. With reference to Figure 2, each cylindrical microlens is arranged to collect light signal from one of the n sampling strips. The coherent illumination can then take place with blanket illumination of the whole reading volume (not shown in the illustration).

A hybrid system with a combination of localised excitation and localised detection may also be useful in some cases.

Figure 6B shows schematically in plan view the optical footprint of such a hybrid imaging arrangement for a reader not according to the invention in which directional detectors are used in combination with localised illumination with an elongate beam. This example may be considered to be a development of the embodiment of the invention of Figure 1 in which directional detectors are provided. In this example, three banks of directional detectors are provided, each bank being targeted to collect light from different portions along the 'l x w' excitation strip. The collection area from the plane of the reading volume are shown with the dotted circles, so that a first bank of, for example 2, detectors collects light signal from the upper portion of the excitation strip, a second bank of detectors collects light signal from a middle portion of the excitation strip and a third bank of detectors collects light from a lower portion of the excitation strip. Each bank of detectors is shown having a circular collection area of diameter approximately l/m, where m is the number of subdivisions of the excitation strip, where m = 3 in the present example. In this way the number of independent data points can be increased by a factor of m for a given scan length 1. As described further below, one or more of different banks of directional detectors can be used for a purpose other than collecting light signal that samples a speckle pattern. For example, one of the banks may be used to collect light signal in a way optimised for barcode scanning. If this is the case it will generally be sufficient for that bank to contain only one detector, since there will be no advantage obtaining cross-correlations when only scanning for contrast.

Having now described the principal structural components and functional components of various reader apparatuses, the numerical processing used to determine class and characteristic signatures are now described. It will be understood that this numerical processing is implemented for the most part in a computer program that runs on the PC 34 with some elements subordinated to the PIC 30.

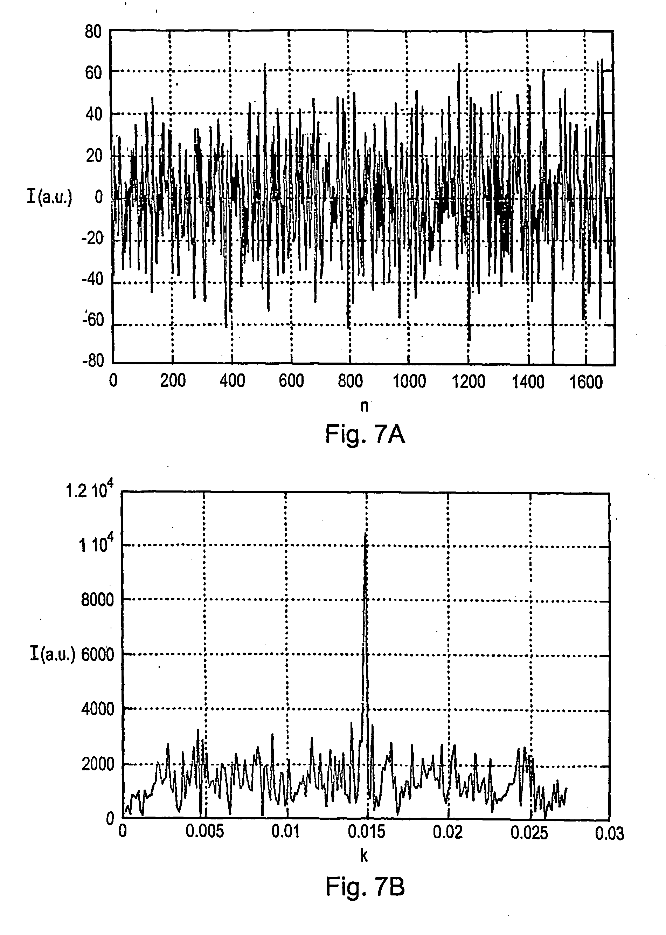

Figure 7A shows data a set of data points taken from a single photodetector 16a...d of the reader of Figure 1 after linearisation with the encoder signal. The point number of the x-axis corresponds to data points sampled from a standard A4 sheet of paper placed in the reading volume and scanned by the coherent beam.

Figure 7B shows a FT of linearised set of data points shown in Figure 7A.

While the data points in Figure 7A appear to be largely random, one notices in Figure 7B a strong peak at a wavelength of 422 $\mu$m. We have derived the same class signature at different places on the surface of the paper sheet, and for different sheets taken from the same ream. A similar scan and FT using a sheet of paper from a different manufacturer yielded a peak wavelength of 287 $\mu$m, indicating how the peak wavelength can be used to provide a class signature that can discriminate between papers made on different meshes.

The wavelength of the FT peak is found to depend upon the direction in which the paper is oriented with respect to the coherent beam scan direction. For example, the first paper sheet yielded a peak wavelength of 422 $\mu$m when scanned in the 'portrait' orientation, and a peak wavelength of 274 $\mu$m when scanned in the 'landscape' orientation. Additionally, one side of the paper often gives a stronger FT peak than the other side. We believe this to be due to the stronger surface corrugations arising on the side of the paper which was in contact with the mesh during the paper's manufacture.

We have performed robustness tests on paper in order to see if natural and intentional degradation and damage to the paper causes the class signature to change or become unreadable. In particular, we have crumpled the paper and rubbed its surface strongly. No strong change was found in the class signature, although more noise appeared at the lower wavelength end of the spectra. We have also exposed the paper to high pressure steam in a medical autoclave. While the FT peak was still clearly visible after autoclaving, its wavelength was found to have reduced by 1.7% from 426 $\mu$m to 418 $\mu$m. We attribute this to shrinking of the paper fibres upon drying out from the steam. Visual inspection of the paper showed it to have strongly degraded in the autoclave. However, this degree of damage is not expected for normal applications.

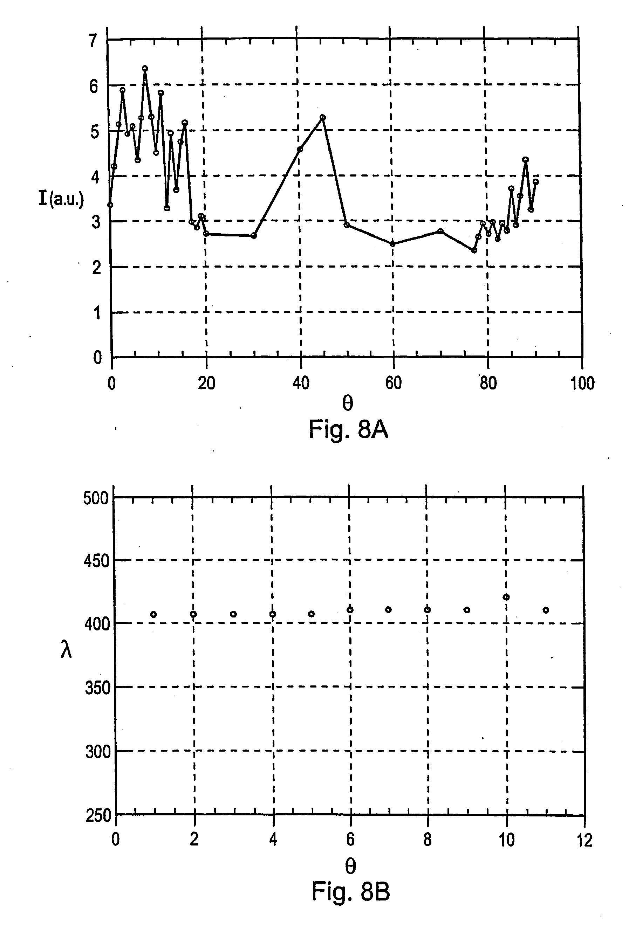

Figure 8A shows how the amplitude of an FT peak varies as the paper is rotated through 90° with respect to the scan direction. The indentations of the paper are believed to form a rectangular grid of dimensions 408 $\mu$m x 274 $\mu$m. At 0° the beam scanning direction is normal to the 408 $\mu$m periodically spaced grid indentations. Strong signals appear at about 0°, 45° and 90°. The 90° signal arises when the scanning direction is normal to the 274 $\mu$m periodically spaced grid indentations.

Figure 8B shows how the wavelength of the strongest FT peak varies with angle from as the paper is rotated with respect to the scan direction. The wavelength of the strongest FT peak is pretty much constant at around 408 $\mu$m as the angle is rotated from 0° to about 10°. We find that the peak in the FT corresponding to the class signature is best detected when the scanning laser direction is within approximately $\pm 10$° of the long axes of the surface ripples coming from the fabrication mesh. This is because the projection of the elongated laser spot (approximately 2mm long) becomes comparable to the spacing between ripples once the rotation angle exceeds about 10°.

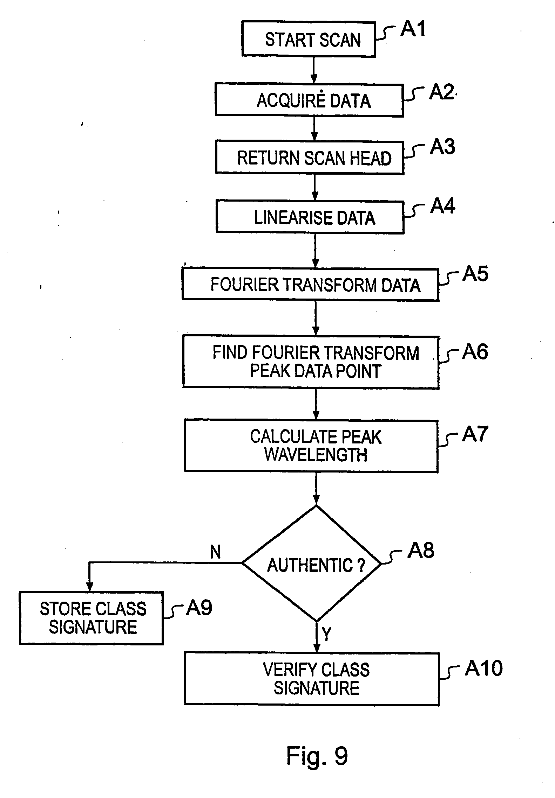

Figure 9 is a flow diagram showing how a class signature is measured from an article and authenticated or recorded.

Step A1 is the initial step during which the scan motor is started. The scan motor is programmed to move at speed v.

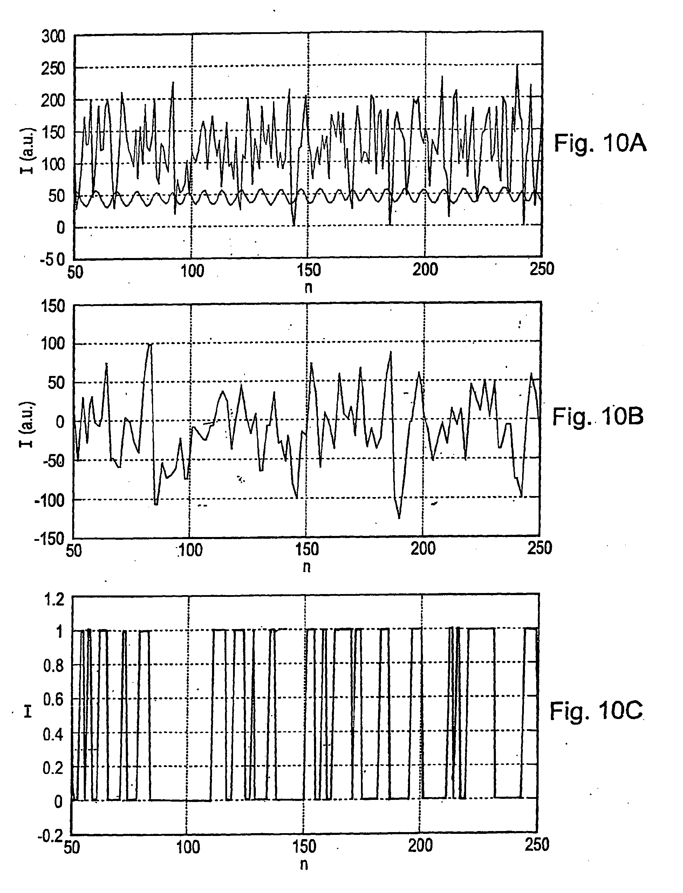

Step A2 is a data acquisition step during which the optical intensity at each of the photodetectors is acquired approximately every 1ms during the entire length of scan. The time interval between sample points is $\Delta t$. Simultaneously, the encoder signal is acquired as a function of time. It is noted that if the scan motor has a high degree of linearisation accuracy (e.g. as would a stepper motor) then an encoder signal need not be acquired. The data is acquired by the PIC 30 taking data from the ADC 31. The data points are transferred in real time from the PIC 30 to the PC 34. Alternatively, the data points could be stored in memory in the PIC 30 and then passed to the PC 34 at the end of a scan. The number n of data points per detector channel collected in each scan is defined as $N$ in the following. Further, the value $a_k(i)$ is defined as the i-th stored intensity value from photodetector $k$, where $i$ runs from 1 to $N$. Examples of two raw data sets obtained from such a scan are illustrated in Figure 10A.

Step A3 is a return scan head step. The scan motor is reversed to reset the scanning mechanism to its initial position in preparation for a subsequent scanning operation.

Step A4 is an optional linearisation step. If performed, this step applies numerical interpolation to locally expand and contract $a_k(i)$ so that the encoder transitions are evenly spaced in time. This corrects the set of data points for local variations in the motor speed. This step is performed in the PC 34 under computer program control.

Step A5 is a FT step in which an FT amplitude spectrum $A_k(i)$ of the Fourier Transform of $a_k(i)$ is calculated. This step is performed in the PC 34 under computer program control by application of a fast Fourier transform (FFT) to individual of the k sets of data points. Optionally, an averaged FT amplitude spectrum can be calculated from respective of the k individual amplitude spectra.

Step A6 is an identification step in which the value of $i$ which maximises $A_k(i)$, excluding $i=0$ (the DC component), is identified. This index, $i_{peak}$, is identified in the PC 34 under computer program control.

Step A7 is a calculating step in which the wavelength associated with $i_{peak}$ is determined in the PC 34 according to the equation $\lambda_{peak}=2\pi/(i_{peak}\times v\,\Delta t)$. The peak wavelength $\lambda_{peak}$ is then used as the class signature.

Step A8 is a decision point. If an article is having its class signature recorded the next step will be Step A9. Whereas if an article is being authenticated by a measurement of its class signature the next step will be Step A10. The PC 34 is programmed to determine which step follows step A8.

Step A9 is a step of storing a class signature. A record comprising the class signature value $\lambda_{peak}$ associated to a description of the paper is stored by the PC 34 in the database 40. The database 40 may be remotely located from the optical reader apparatus 1, and the record may be securely encrypted prior to transmission therebetween.

Step A10 is a step of verifying a class signature. The PC 34 compares $\lambda_{peak}$ with all entries in the database 40, until a match is found to within a predefined error margin. The PC 34 then displays the record entry description for the matching paper type, if any is found. If no matching entry is found, the PC 34 may optionally seek to extend a search to other databases. Optionally, a message stating that no match is available may be displayed. Optionally, whether or not any class match is found, the PC 34 may subsequently seek to perform an analysis to determine whether a characteristic signature from the article matches a predetermined characteristic signature in order to attempt to uniquely identify the article.

Figure 10A shows raw data from a single one of the photodetectors 16a...d of the reader of Figure 1. The graph plots signal intensity I in arbitrary units (a.u.) against point number n (see Figure 2). The higher trace fluctuating between I = 0 - 250 is the raw signal data from photodetector 16a. The lower trace is the encoder signal picked up from the markers 28 (see Figure 2) which is at around I = 50.

Figure 10B shows the photodetector data of Figure 10A after linearisation with the encoder signal. In addition, the average of the intensity has been computed and subtracted from the intensity values. The processed data values thus fluctuate above and below zero.

Figure 10C shows the data of Figure 10B after digitisation to provide a characteristic signature. The digitisation scheme adopted is a simple binary one in which any positive intensity values are set at value 1 and any negative intensity values are set at zero. It will be appreciated that multi-state digitisation could be used instead, or any one of many other possible digitisation approaches. The main important feature of the digitisation is merely that the same digitisation scheme is applied consistently.

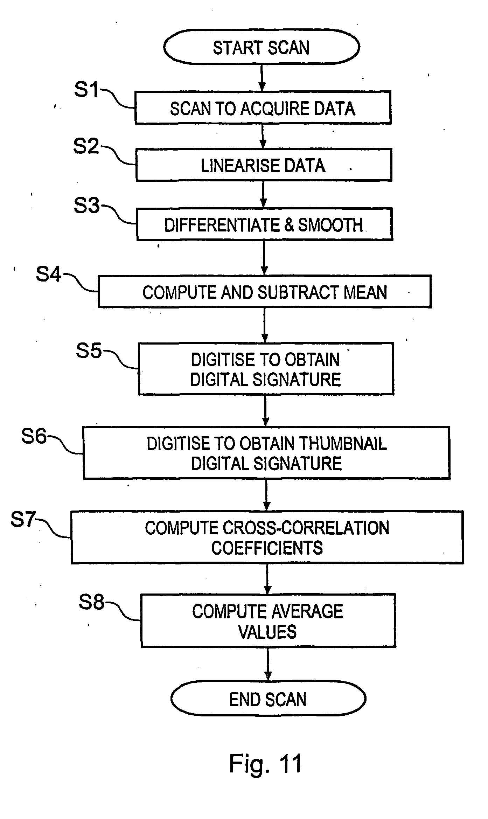

Figure 11 is a flow diagram showing how a characteristic signature of an article is generated from a scan.

Step S1 is a data acquisition step during which the optical intensity at each of the photodetectors is acquired approximately every 1ms during the entire length of scan. Simultaneously, the encoder signal is acquired as a function of time. It is noted that if the scan motor has a high degree of linearisation accuracy (e.g. as would a stepper motor) then linearisation of the data may not be required. The data is acquired by the PIC 30 taking data from the ADC 31. The data points are transferred in real time from the PIC 30 to the PC 34. Alternatively, the data points could be stored in memory in the PIC 30 and then passed to the PC 34 at the end of a scan. The number n of data points per detector channel collected in each scan is defined as $N$ in the following. Further, the value $a_k(i)$ is defined as the i-th stored intensity value from photodetector $k$, where $i$ runs from 1 to $N$. Examples of two raw data sets obtained from such a scan are illustrated in Figure 10A.

Step S2 uses numerical interpolation to locally expand and contract $a_k(i)$ so that the encoder transitions are evenly spaced in time. This corrects for local variations in the motor speed. This step is performed in the PC 34 by a computer program.

Step S3 is an optional step. If performed, this step numerically differentiates the data with respect to time. It may also be desirable to apply a weak smoothing function to the data. Differentiation may be useful for highly structured surfaces, as it serves to attenuate uncorrelated contributions from the signal relative to correlated (speckle) contributions.

Step S4 is a step in which, for each photodetector, the mean of the recorded signal is taken over the $N$ data points. This mean value corresponds to the artefact signal referred to previously. For each photodetector, this mean value is subtracted from all of the data points so that the data are distributed about zero intensity. Reference is made to Figure 10B which shows an example of a scan data set after linearisation and subtraction of a computed average.

Step S5 digitises the analogue photodetector data to compute a digital signature representative of the scan. The digital signature is obtained by applying the rule: $a_k(i) > 0$ maps onto binary '1' and $a_k(i) <= 0$ maps onto binary '0'. The digitised data set is defined as $d_k(i)$ where $i$ runs from 1 to $N$. The signature of the article may advantageously incorporate further components in addition to the digitised signature of the intensity data just described. These further optional signature components are now described.

Step S6 is an optional step in which a smaller 'thumbnail' digital signature is created. This is done either by averaging together adjacent groups of $m$ readings, or more preferably, by picking every cth data point, where $c$ is the compression factor of the thumbnail. The latter is preferred since averaging may disproportionately amplify noise. The same digitisation rule used in Step S5 is then applied to the reduced data set. The thumbnail digitisation is defined as $t_k(i)$ where $i$ runs 1 to $N/c$ and c is the compression factor.

Step S7 is an optional step applicable when multiple detector channels exist. The additional component is a cross-correlation component calculated between the intensity data obtained from different ones of the photodetectors. With 2 channels there is one possible cross-correlation coefficient, with 3 channels up to 3, and with 4 channels up to 6 etc. The cross-correlation coefficients are useful, since it has been found that they are good indicators of material type. They may thus be used to corroborate information derived from analysing the class signature. For example, for a particular type of document, such as a passport of a given type, or laser printer paper, the cross-correlation coefficients always appear to lie in predictable ranges. A normalised cross-correlation can be calculated between $a_k(i)$ and $a_l(i)$, where $k \neq l$ and k,l vary across all of the photodetector channel numbers. The normalised cross-correlation function $\Gamma$ is defined as

$$\Gamma(k,l) = \frac{\sum_{i=1}^{N} a_k(i) a_l(i)}{\sqrt{\left(\sum_{i=1}^{N} a_k(i)^2\right)\left(\sum_{i=1}^{N} a_l(i)^2\right)}}$$

The use of the cross-correlation coefficients in verification processing of characteristic signatures is described further below.

Step S8 is another optional step which is to compute a simple intensity average value indicative of the signal intensity distribution. This may be an overall average of each of the mean values for the different detectors or an average for each detector, such as a root mean square (rms) value of $a_k(i)$. If the detectors are arranged in pairs either side of normal incidence as in the reader described above, an average for each pair of detectors may be used. The intensity value has been found to be a good crude filter for material type, since it is a simple indication of overall reflectivity and roughness of the sample. For example, one can use as the intensity value the unnormalised rms value after removal of the average value, i.e. the DC background.

The signature data obtained from scanning an article can be compared against records held in a signature database for verification purposes and/or written to the database to add a new record of the signature to extend the existing database.

A new database record will include the digital signature obtained in Step S5 as well as optionally its smaller thumbnail version obtained in Step S6 for each photodetector channel, the cross-correlation coefficients obtained in Step S7 and the average value(s) obtained in Step S8. Alternatively, the thumbnails may be stored on a separate database of their own optimised for rapid searching, and the rest of the data (including the thumbnails) on a main database.

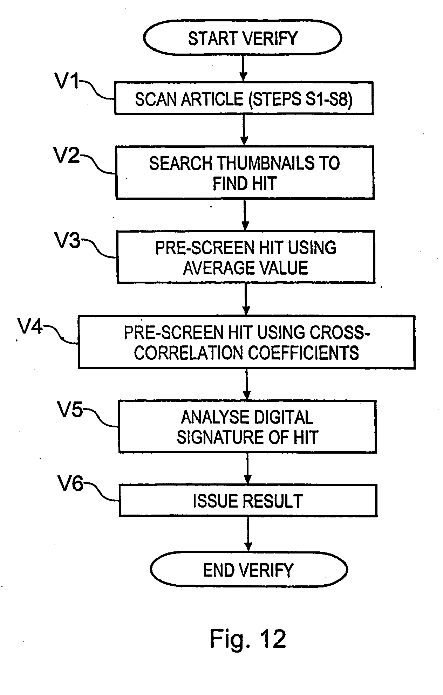

Figure 12 is a flow diagram showing how a characteristic signature of an article obtained from a scan can be verified against a predetermined characteristic signature database.

In a simple implementation, the database could simply be searched to find a match based on the full set of characteristic signature data. However, to speed up the verification process, the process preferably uses the smaller thumbnails and pre-screening based on the computed average values and cross-correlation coefficients as now described.

Verification Step V1 is the first step of the verification process, which is to scan an article according to the process described above, i.e. to perform Scan Steps S1 to S8.

Verification Step V2 takes each of the thumbnail entries and evaluates the number of matching bits between it and $t_k(i+j)$, where $j$ is a bit offset which is varied to compensate for errors in placement of the scanned area. The value of $j$ is determined and then the thumbnail entry which gives the maximum number of matching bits. This is the 'hit' used for further processing.

Verification Step V3 is an optional pre-screening test that is performed before analysing the full digital signature stored for the record against the scanned digital signature. In this pre-screen, the rms values obtained in Scan Step S8 are compared against the corresponding stored values in the database record of the hit. The 'hit' is rejected from further processing if the respective average values do not agree within a predefined range. The article is then rejected as non-verified (i.e. jump to Verification Step V6 and issue fail result).

Verification Step V4 is a further optional pre-screening test that is performed before analysing the full digital signature. In this pre-screen, the cross-correlation coefficients obtained in Scan Step S7 are compared against the corresponding stored values in the database record of the hit. The 'hit' is rejected from further processing if the respective cross-correlation coefficients do not agree within a predefined range. The article is then rejected as non-verified (i.e. jump to Verification Step V6 and issue fail result). Optionally, pre-screening may be based upon the results of an article's class signature.

Verification Step V5 is the main comparison between the scanned digital signature obtained in Scan Step S5 and the corresponding stored values in the database record of the hit. The full stored digitised signature, $d_k^{db}(i)$ is split into $n$ blocks of $q$ adjacent bits on $k$ detector channels, i.e. there are $qk$ bits per block. A typical value for $q$ is 4 and a typical value for $k$ is 4, making typically 16 bits per block. The $qk$ bits are then matched against the $qk$ corresponding bits in the stored digital signature $d_k^{db}(i+j)$. If the number of matching bits within the block is greater or equal to some pre-defined threshold $z_{thresh}$, then the number of matching blocks is incremented. A typical value for $z_{thresh}$ is 13. This is repeated for all $n$ blocks. This whole process is repeated for different offset values of $j$, to compensate for errors in placement of the scanned area, until a maximum number of matching blocks is found. Defining $M$ as the maximum number of matching blocks, the probability of an accidental match is calculated by evaluating:

$$p(M) = \sum_{w=n-M}^{n} s^w (1-s)^{n-w} \, {}_w^n C$$

where $s$ is the probability of an accidental match between any two blocks (which in turn depends upon the chosen value of $z_{threshold}$), M is the number of matching blocks and p(M) is the probability of M or more blocks matching accidentally. The value of s is determined by comparing blocks within the data base from scans of different objects of similar materials, e.g. a number of scans of paper documents etc. For the case of $q=4$, $k=4$ and $z_{threshold}=13$, we find a typical value of $s$ is 0.1. If the $qk$ bits were entirely independent, then probability theory would give $s=0.01$ for $z_{thrshold}=13$. The fact that we find a higher value empirically is because of correlations between the k detector channels and also correlations between adjacent bits in the block due to a finite laser spot width. A typical scan of a piece of paper yields around 314 matching blocks out of a total number of 510 blocks, when compared against the data base entry for that piece of paper. Setting $M$=3314, $n$=510, $s$=0.1 for the above equation gives a probability of an accidental match of $10^{-177}$.

Verification Step V6 issues a result of the verification process. The probability result obtained in Verification Step V5 may be used in a pass/fail test in which the benchmark is a pre-defined probability threshold. In this case the probability threshold may be set at a level by the system, or may be a variable parameter set at a level chosen by the user. Alternatively, the probability result may be output to the user as a confidence level, either in raw form as the probability itself, or in a modified form using relative terms (e.g. no match / poor match / good match / excellent match) or other classification.

It will be appreciated that many variations are possible. For example, instead of treating the cross-correlation coefficients as a pre-screen component, they could be treated together with the digitised intensity data as part of the main signature. For example the cross-correlation coefficients/class signatures could be digitised and added to the digitised intensity data. The cross-correlation coefficients/class signatures could also be digitised on their own and used to generate bit strings or the like which could then be searched in the same way as described above for the thumbnails of the digitised intensity data in order to find the hits.

The above embodiments of the invention related to a linear scanner in which the article is scanned in one direction only. In such a scanner, the article, or more specifically the imprint pattern, needs to be aligned in a controlled and reproducible manner. A rotary scanner which overcomes this restriction by scanning all possible directions is now described as an example.

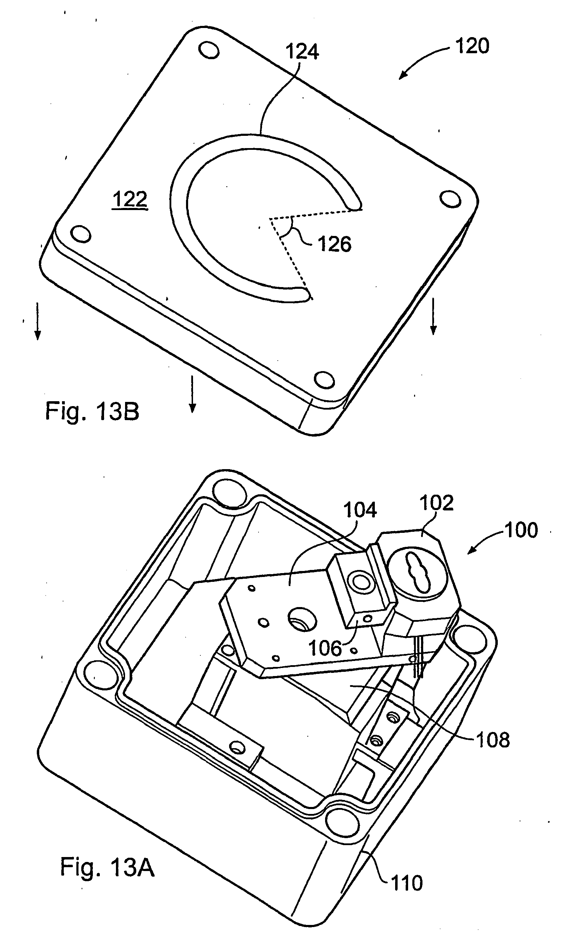

Figure 13A shows a rotary scanner 100 for use in a rotary scanning apparatus for determining a class signature from an article made of paper or cardboard. The scanner 100 comprises a scan head 102 rotatably mounted in a housing 110. The scan head 102 is mounted on a rotating arm 104 adjacent a position encoder module 106. The rotating arm is operably coupled to a drive motor 108.

Figure 13B shows a lid 120 for fitting to the housing 110 of rotary scanner 100 shown in Figure 13A. The lid 120 comprises a flat face portion 122 having an arcuate slot 124 defined therein. The arcuate slot 124 subtends an angle of 360° minus the angle 126. In this embodiment, the acuate slot 124 subtends an angle of 270°. This allows the scan head 102 to scan over approximately 270 degrees of an arc, thus sampling all possible orientations of the paper.

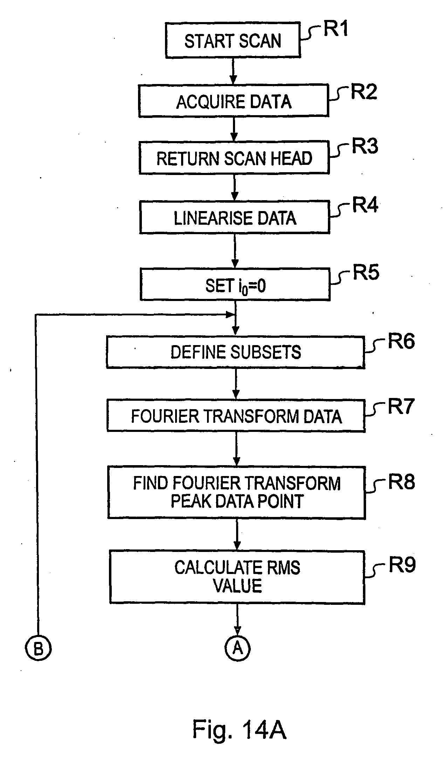

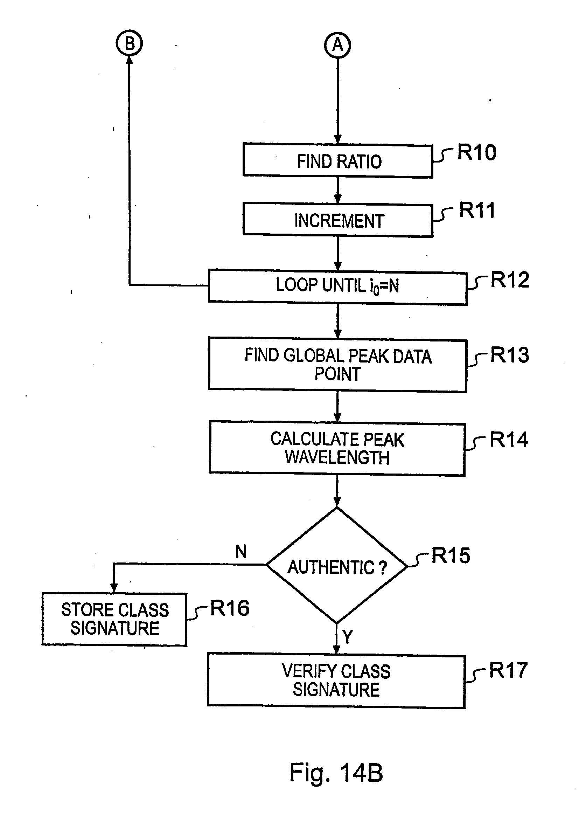

The rotary scanning apparatus shown in Figures 13A and 13B can be incorporated into scanning system similar to the linear scanning apparatus previously described. In this case, the linear scanning apparatus sensing system is replaced by the rotary version of Figures 13A and 13B, whilst the data processing apparatus is reprogrammed to implement the method described below in relation to Figure 14.

There are two principal advantages of this example. Firstly, there is no need to know the relative orientation of the paper and the scanner, since the fit between the observed set of spectra and the database of paper types can be done for different starting angles, until a match is obtained. This means that the scanner can be dropped down anywhere on the paper surface and a class signature reported. Secondly, a greater level of security is provided, since the class signature can now be composed of a combination of features taken from different scan directions. For example, the transformed set of data points forming the class signature could be used to pick out the two distinct periodicities of a rectangular mesh structure. Another example would be to determine the order of rotational symmetry of a mesh, such as to identify a hexagonal mesh of a given periodicity and distinguish it from a square mesh of the same periodicity.

Figures 14A and 14B together illustrate a flow diagram showing how a class signature is measured from an article using a rotary scan and authenticated or recorded.

Step R1 is the initial step during which the scan motor is started. The scan motor is programmed to move at speed v.

Step R2 is a data acquisition step during which the optical intensity at each of the photodetectors is acquired approximately every 1ms during the entire length of scan The time interval between sample points is $\Delta t$. Simultaneously, the encoder signal is acquired as a function of time. It is noted that if the scan motor has a high degree of linearisation accuracy (e.g. as would a stepper motor) then an encoder signal need not be acquired. An encoder signal may be provided by detecting when the position encoder module 106 passes markings provided on the lid 120 adjacent the slot 124. The data is acquired by the PIC 30 taking data from the ADC 31. The data points are transferred in real time from the PIC 30 to the PC 34. Alternatively, the data points could be stored in memory in the PIC 30 and then passed to the PC 34 at the end of a scan. The number n of data points per detector channel collected in each scan is defined as N in the following. Further, the value $a_k(i)$ is defined as the i-th stored intensity value from photodetector $k$, where $i$ runs from 1 to $N$.

Step R3 is a return scan head step. The scan motor is reversed to reset the scanning mechanism to its initial position in preparation for a subsequent scanning operation.

Step R4 is an optional linearisation step. If performed, this step applies numerical interpolation to locally expand and contract $a_k(i)$ so that the encoder transitions are evenly spaced in time. This corrects the set of data points for local variations in the motor speed. This step is performed in the PC 34 under computer program control.

Step R5 is an initialisation step at which $i_0$ is set to zero.

Step R6 is a step in which subsets of the data points are created from the whole scan. Subsets $b_k(i)$ of $a_k(i)$ which run from $I=i_0-\Delta_i$ to $i_0+\Delta I$ are created. As indicated above in connection with Figure 8B, $\Delta I$ should correspond to approximately 10° of the arc of the scanner.

Step R7 is a FT step in which an FT amplitude spectrum $B_k(i)$ of the Fourier Transform of $b_k(i)$ is calculated. This step is performed in the PC 34 under computer program control by application of a fast Fourier transform (FFT) to individual of the k sets of data points. Optionally, an averaged FT amplitude spectrum can be calculated from respective of the k individual amplitude spectra should multiple detectors be provided in the scanner head 102. Because of the shorter sequences of data used in each transform, the FT peaks are broader and less intense than for the linear scan. Nevertheless, under certain conditions, the set of spectra form a good class signature for the paper.

Step R8 is an identification step in which the value of $i$ which maximises $B_k(i)$, excluding $i=0$ (the DC component), is identified. This index, $i_{peak}$, is identified in the PC 34 under computer program control.

Step R9 is a step at which the root mean square (r.m.s.) value of $B_k(i)$ is determined. Calculate the r.m.s value of $B_k(i)$, using:

$$rms = \sqrt{\frac{1}{2\Delta i + 1}\sum_{i=0}^{i=2\Delta i}\left(B_k(i)\right)^2}$$

For a given angular scan $\varphi$ we find the maximum peak height in the amplitude spectrum and divide it by the r.m.s. value of the amplitude spectrum. We call this ratio the peak significance, since it tells us how much higher the peak is than the rest of the spectrum. Peak significances below about three to four mean there is no clearly defined peak. Peak significances above about four indicate a well defined peak. If the peak significance is above about three to four, we measure the wavelength at the centre of the peak. If the peak significance is less than about three to four, we discard the data and pass onto the next value of $\varphi$. We are thus able to plot a graph of peak wavelength against $\varphi$, but limited to the parts of the arc where a well defined peak exists. This plot forms the class signature for that scanned paper.

Figure 8A shows for a real measurement from a sheet of paper the ratio of the amplitude of the strongest peak in the amplitude spectrum to the r.m.s. value of the amplitude spectrum. A clearly significant peak can be seen in the angular range 0-15 degrees, with weaker peaks appearing around 45 degrees and 90 degrees. Focusing on the strongest peak close to zero degrees, Figure 8B shows the wavelength of this peak as a function of angle. A roughly constant wavelength of 408 $\mu$m is found, which forms the class signature for this sheet of paper. The slightly upward curvature in the dependence of wavelength on angle which can be seen in Figure 8B is due to the 1/cos(angle) projection of the wavelength as the scan direction varies.

Step R10 is a ratio determining step. The ratio $B(i_{peak}/rms)$ is calculated and stored.

Step R11 its an incrementing step at which $i_0$ is incremented.

Step R12 is a loop testing step which causes step R6 to be performed again unless $i_0 = N$. If $i_0 = N$ then step R13 is performed.

Step R13 is a global peak data point determining step at which $i_{peak}$ the value of $i_0$ which maximises the ratio $B(i_{peak}/rms)$ is determined

Step R14 is a calculating step in which the wavelength associated with $i_{peak}$ is determined in the PC 34 according to the equation $\lambda_{peak}=2\pi/(i_{peak}\times v \Delta t)$. The peak wavelength $\lambda_{paek}$ is then used as the class signature.

Step R15 is a decision point. If an article is having its class signature recorded the next step will be Step R16. Whereas if an article is being authenticated by a measurement of its class signature the next step will be Step R17. The PC 34 is programmed to determine which step follows step R15.

Step R16 is a step of storing a class signature. A record comprising the class signature value $\lambda_{peak}$ associated to a description of the paper is stored by the PC 34 in the database 40. The database 40 may be remotely located from the optical reader apparatus 1, and the record may be securely encrypted prior to transmission therebetween.

Step R17 is a step of verifying a class signature. The PC 34 compares $\lambda_{peak}$ with all entries in the database 40, until a match is found to within a predefined error margin. The PC 34 then displays the record entry description for the matching paper type, if any is found. If no matching entry is found, the PC 34 may optionally seek to extend a search to other databases. Optionally, a message stating that no match is available may be displayed. Optionally, whether or not any class match is found, the PC 34 may subsequently seek to perform an analysis to determine whether a characteristic signature from the article matches a predetermined characteristic signature in order to attempt to uniquely identify the article.

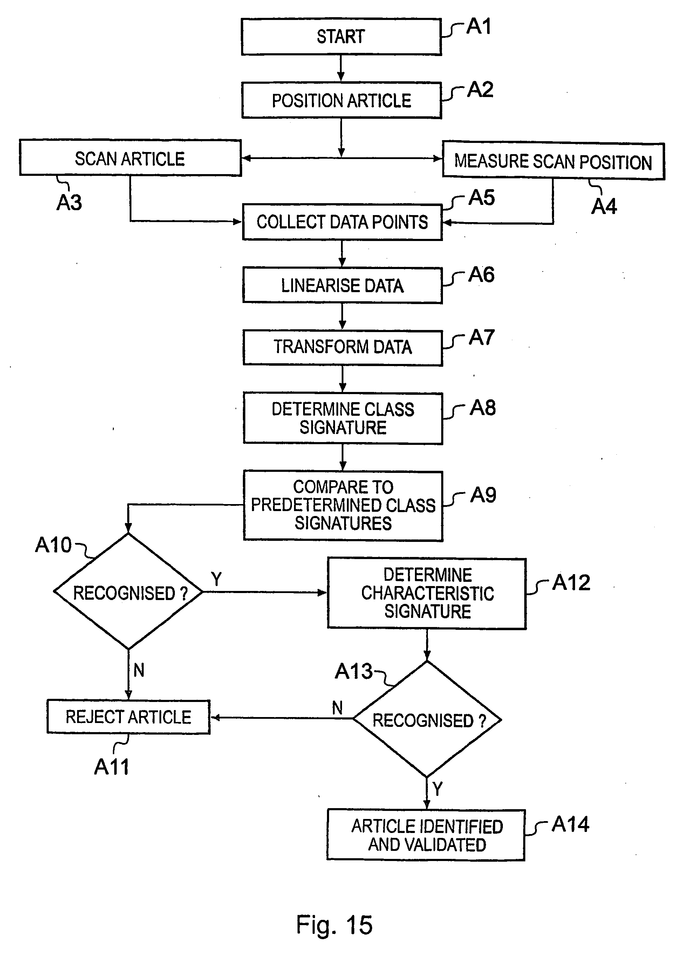

Figure 15 is a flow diagram showing how an apparatus according to an embodiment of the invention operates.

Step A1 is the start of the process. The process is under the control of the PC 34.

Step A2 is a step of positioning an article to be analysed in a reading volume. This step can be performed manually or automatically. For example, a sheet feeder may be used to position paper/cardboard articles in the apparatus reading volume or a hand-held scanner can be placed on the article.

Step A3 is a step of scanning the article. According to the invention, this involves moving the beam with respect to the article using a linear scan. However, a rotary scan of the type hereindescribed may also be used to perform this step.

Step A4 is a step of measuring the scan position relative to the reading volume. Information relating to the position of the scanner over the time period of the scan is recorded. This step is performed by the PC 34 monitoring the scanner position by reading data from the encoder/decoder 19 via the PIC 30 whilst the scan is in progress.

Step A5 is a data collection step during which the set of data points are sequentially populated. Each set of data points from the detectors 16a-d are averaged by the PC 34 and stored as an averaged set of data points.

Step A6 is a linearisation step. The PC linearises the set of data points prior to determining a class signature by using the relative measured position information obtained at step A4 to modify the set of data points in order to ensure that consecutive data points in the set are equally-spaced with respect to time or position of their acquisition during the scan.

Step A7 is a transform step. The PC 34 applies a fast Fourier transform (FFT) to the averaged set of data points. An FFT, or other transform, may be used to provide a transformed data set comprising one or more peaks.

Step A8 involves determining the class signature. The amplitude peaks of the transform found in step A7 are thresholded to derive a digital signal. This digital signal is used as the class signature.

Step A9 is a comparison step. The class signature is compared to a database of predetermined class signatures stored in the database 40.

Step A10 is a decision step. If no match for the class signature is found in the database 40, the apparatus proceeds to step A11. Otherwise, where a match is found for the class signature, the apparatus proceeds to implement step A12 in order to verify the characteristic signature.

Step A11 is a rejection step at which the apparatus can alert the operator of the apparatus that the class signature of the article has not been recognised. The operator may subsequently decide how to act upon this notification.

Step A12 is a step of determining a characteristic signature. This step may comprise steps of determining a characteristic signature such as are described above. However, prior to searching the database 40 for all characteristic signatures in the database to compare to the measured characteristic signature, the PC 34 can select a subset of the predetermined characteristic signatures to search. This speeds up the search for a match to the measured characteristic signature. Additionally, in this embodiment, the apparatus can use the same sets of data points obtained during the scan to derive both the class and characteristic signatures.

Step A13 is another decision step. If no match for the characteristic signature is found in the database 40, the apparatus proceeds to step A11 as described above.

Step A14 is a step that is reached if both the class and characteristic signatures are recognised. At this step various indicia or actions may occur. For example, an indication that the paper/cardboard article has been validly identified may be displayed to an operator of the apparatus, an automatic lock release may be activated, etc. as desired.

From the above detailed description it will be understood how an article made of material, such as paper or cardboard, can be identified by exposing the material to coherent radiation, collecting a set of data points that measure scatter of the coherent radiation from the material, and determining a class/characteristic signature of the article from the set of data points.

It will also be understood that the scan area is essentially arbitrary in terms of its size or location on an article. If desired, the scan could be a linear scan rastered to cover a larger two-dimensional area, for example.

Moreover, it will be understood how this can be applied to identify a product by its packaging, a document or a ticketed item of clothing, by exposing the article to coherent radiation, collecting a set of data points that measure scatter of the coherent radiation from intrinsic structure of the article, and determining a class/characteristic signature of the product from the set of data points.

From the above description of the numerical processing, it will be understood that degradation of the beam localisation (e.g. beam cross-section enlargement in the reading volume owing to sub-optimum focus of the coherent beam) will not be catastrophic to the system, but merely degrade its performance by increasing the accidental match probability. The apparatus is thus robust against apparatus variations giving a stable gradual degradation in performance rather than a sudden unstable failure. In any case, it is simple to perform a self test of a reader, thereby picking up any equipment problems, by performing an autocorrelation on the collected data to ascertain the characteristic minimum feature size in the response data.

A further security measure that can be applied to paper or cardboard, for example, is to adhesively bond a transparent seal (e.g. adhesive tape) over the scanned area. The adhesive is selected to be sufficiently strong that its removal will destroy the underlying surface structure which it is essential to preserve in order to perform a characteristic signature verification scan.

As described above, the reader may be embodied in an apparatus designed specifically to implement the invention. In other cases, the reader will be designed by adding appropriate ancillary components to an apparatus principally designed with another functionality in mind, such as a photocopier machine, document scanner, document management system, POS device, ATM, air ticket boarding card reader or other device.

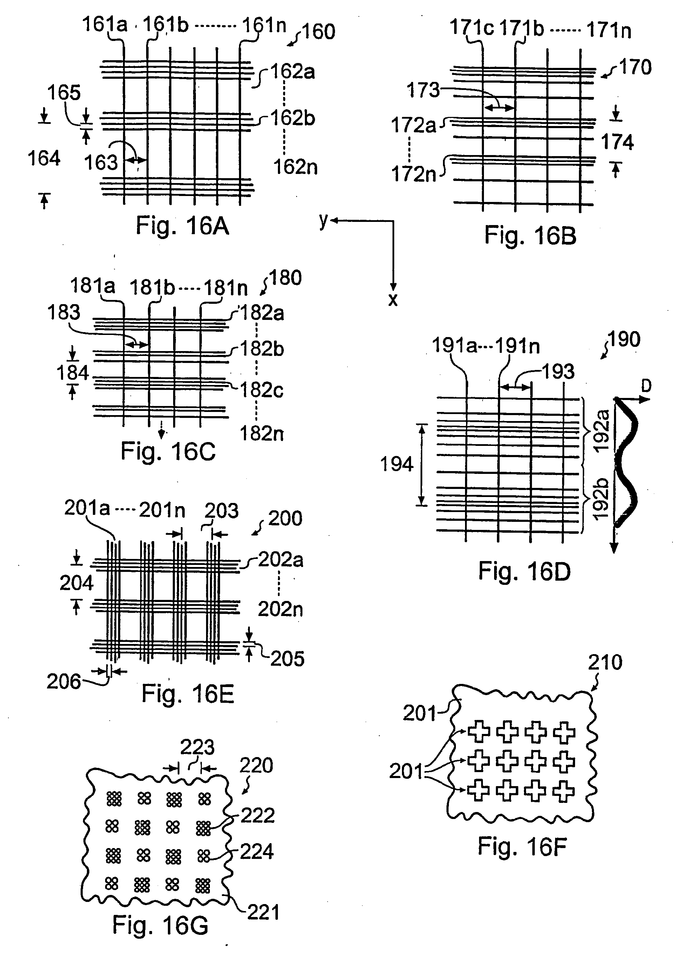

Figure 16A-G show bespoke screens which can be used in a standard paper-making process. Imprints may be provided to provide a desired class signature. Such imprints may incorporate one-dimensional or two-dimensional pattern variations. The patterns imprinted may be periodic with a periodicity that is less than, or equal to, the length of a scan in order to ensure that a scanner detects the desired frequency components of the pattern.

The bespoke screens can be used to replace standard paper making screens.

Various techniques and materials for making screens are well known in the art (for example, see references [6] to [13]), and these may also be used for bespoke screens. For example, screens may be made using wires, plates etc., formed of stainless steel, polymer materials etc.

Figure 16A shows a bespoke screen 160 useful with the invention. The bespoke screen 160 comprises a grid of wires 161a-n spaced at regular intervals 163 in a first direction (y-axis). Spaced groups of regularly spaced individual wires 162a-n are provided at regular intervals 164 in a second direction (x-axis) transverse to the first, direction. The imprint left by this screen 160 thus has a single frequency component in the first direction. It also has two frequency components in the second direction. The first component reflects the spacing of the groups of wires 164 and the second the inter-wire spacing 165.

Figure 16B shows a bespoke screen 170 useful with the invention. The bespoke screen 170 comprises a grid of wires 171a-n spaced at regular intervals 173 in a first direction (y-axis). Spaced groups of wires 172a-n are provided at regular intervals 174 in a second direction (x-axis) transverse to the first direction. The groups of wires 172a-n provided in the second direction are spaced according to a chirped pattern in which the spacing between the individual wires in the group increases linearly.

The imprint left by this screen thus has a single frequency component in the first direction. It also has a spread frequency signal in the second direction which derives from the chirped spatial modulation applied to the wires in the groups 172a-n, as well as a frequency component derived from the spacing 174 between the groups in the second direction.

Figure 16C shows a bespoke screen 180 useful with the invention. The bespoke screen 180 comprises a grid of wires 181a-n spaced at regular intervals in a first direction (y-axis). Various groups of wires 182a-n are provided at regular intervals 184 in a second direction (x-axis) transverse to the first direction. Where one such group may have been placed, in this embodiment a group 182c incorporating a more closely packed group of wires is provided.

The imprint left by this screen has a single frequency component in the first direction. It also has a three component frequency signal in the second direction. The first component reflects the spacing of the groups of wires 184 and the second the inter-wire spacing. However, a third component is also present at a frequency higher than the first component. The third component derives from the closer packing of the wires in the group 182c.

By detecting the third frequency component, use during paper manufacture of a group of wires having the spacing of the group 182c can be detected. This can be used to encode a binary signal. Other group inter-wire spacings may also be provided to enable the encoding of a sequence of binary digits or byte. As is well-known, such bytes can be used to encode various information.

Figure 16D shows a bespoke screen 190 useful with the invention. The bespoke screen 190 comprises a grid of wires 191a-n spaced at regular intervals 193 in a first direction (y-axis). Spaced groups of wires 192a-n are provided at regular intervals 194 in a second direction (x-axis) transverse to the first direction. The wires 192a-n in the groups are spaced according to a sinusoidally varying pattern.

The imprint left by this screen has a single frequency component in the first direction. It also has a spread frequency signal in the second direction which derives from the sinusoidal spatial modulation applied to the wires in the groups 192a-n. In various embodiments, the sinusoidal spatial modulation acts as a carrier frequency that can itself be modulated to provide various encoding schemes. For example, phase shift keying modulation may be applied to the carrier sinusoid and encoded into the pattern to be applied to paper by appropriate spacing of the wires.

Figure 16E shows a bespoke screen 200 useful with the invention. The bespoke screen 200 comprises a grid of groups of wires 201a-n spaced at regular intervals 203 in a first direction (y-axis). Wires in the groups 201a-n are themselves spaced at regular intervals 206. Spaced groups of regularly spaced wires 202a-n are also provided at regular intervals 204 in a second direction (x-axis) transverse to the first direction.

The imprint left by this screen 200 has two frequency components in the first direction and two frequency components in the second direction. The first component in the first direction reflects the spacing 203 of the groups of wires 201a-n and the second the inter-wire spacing 206. The first component in the second direction reflects the spacing 204 of the groups of wires 202a-n and the second the inter-wire spacing 205.

Figure 16F shows a bespoke screen 210 useful with the invention. The bespoke screen 210 comprises a plate 201 comprising a plurality of cross-shaped perforations 202 spaced in a regular two dimensional pattern. Such a screen may be formed by etching or punching a sheet material.

Figure 16G shows a bespoke screen 220 useful with the invention. The bespoke screen 220 comprises a plate 221 comprising a repeating pattern of perforations 222, 224 spaced in a regular two dimensional pattern. The pattern comprises a repeating sequence of alternating groups of circular perforations 222, 224 of different sizes and numbers set out in a grid arrangement spaced at regular intervals 223. The first group of circular perforations 222 consists of a 3x3 array of circular holes grouped together. The second group of circular perforations 224 consists of a 2x2 array of circular holes grouped together. The first and second groups 222, 224 occupy approximately the same surface area of the plate 221.

The imprint left by the screen 220 has a frequency component deriving from the grid interval 223 plus a more complex response arising from the groups of perforations 222, 224. Such a response can be measured and used to provide a class signature for paper/cardboard articles made using the bespoke screen 220.

It will be appreciated that the imprints made by the illustrated screens are all amenable to functional analysis to determine a class signature, using Fourier transforms or other kinds of transform analysis.

## REFERENCES

[1] Kravolec "Plastic tag makes foolproof ID" Technology Research News, 2 October 2002
[2] R Anderson "Security Engineering: a guide to building dependable distributed systems" Wiley 2001, pages 251-252 ISBN 0-471-38922-6
[3] US 5,521,984
[4] US 5,325,167
[5] GB 0405641.2 (as yet unpublished and incorporated herein in its entirety by reference)
[6] US 4,564,051
[7] US 6,546,964
[8] US 4,546,964
[9] US 5,152,326
[10] US, 5,358,014
[11] US 6,546,964
[12] US 200410011491
[13] WO 2004/020734

## Claims

1. An apparatus (1) arranged to analyse an article made of paper or cardboard placed in a reading volume, comprising:

   a scanner arranged to scan an article with a coherent elongate optical beam (15) having an elongate focus, the scanner being arranged to scan the article linearly in a direction transverse to the major axis of the elongate focus;
   a detector arrangement (16) comprising a plurality of detectors, each detector being operable to accept light signals scattered over an area larger than an excitation area provided by the coherent elongate beam and each detector being arranged so as to be operable to detect light signals scattered from substantially the same position of the reading volume, and the detector arrangement being arranged to collect a set of data points from signals obtained when the coherent elongate beam reflects from the reading volume, wherein the data points relate to scatter from different parts of the reading volume and different ones of the data points relate to signals obtained at different times during the scan; and
   a data acquisition and processing module (36) arranged to process the set of data points so as to determine whether the article possesses an intrinsic surface structure which gives rise to a predetermined class signature that identifies articles of a known generic type from the intrinsic surface structure properties of the article.

2. The apparatus of claim 1, wherein the data acquisition and processing module is operable to analyse the set of data points to determine whether it contains class signature information indicative of periodic variations in the intrinsic properties of the article.

3. The apparatus of claim 1 or claim 2, wherein the data acquisition and processing module is operable to derive a measured class signature from the result of a mathematical transform applied to the data points and compare the measured class signature to one or more predetermined class signatures, wherein a match between the measured class signature and a predetermined class signature indicates that the article is of the generic type associated with the matched predetermined class signature.

4. The apparatus of any preceding claim, further comprising:

   an encoder/detector module for measuring the relative position of the coherent elongate beam and the article during the scan; and
   wherein the data acquisition and processing module is further operable to linearise the set of data points prior to determining a class signature by using relative measured position information obtained from the encoder/detector module to modify the set of data points in order to ensure that consecutive data points in the set are equally-spaced with respect to time or position of their acquisition during the scan.

5. The apparatus of any preceding claim, wherein the data acquisition and processing module is further operable to determine a characteristic signature from the set of data points, the characteristic signature being for distinguishing individual articles from other articles of the same generic type.

6. The apparatus of any preceding claim, wherein the intrinsic properties of the article are imprints imparted to the paper or cardboard during an ordinary manufacturing process.

7. The apparatus of any preceding claim, wherein the scanner is configured to project the coherent elongate beam towards the article at near normal incidence.

8. A method of analysing an article made of paper or cardboard, the method comprising:

placing an article in a reading volume;
scanning the article with a coherent elongate optical beam (16) having an elongate focus, the article being scanned linearly in a direction transverse to the major axis of the elongate focus;
collecting, using a detector arrangement, a set of data points from signals obtained when the coherent beam reflects from the reading volume, wherein the data points relate to scatter from different parts of the reading volume and different ones of the data points relate to signals obtained at different times during the scan, in which the detector arrangement comprises a plurality of detectors, each detector accepting light signals scattered over an area larger than an excitation area provided by the coherent elongate beam and each detector being arranged so as to be operable to detect light signals scattered from substantially the same position of the reading volume,; and
processing the set of data points to determine whether the article possesses an intrinsic surface structure which gives rise to a predetermined class signature that identifies articles of a known generic type from the intrinsic surface structure properties of the article.

9. The method of claim 8, wherein processing the set of data points comprises analysing the set of data points to determine whether it contains class signature information indicative of periodic variations in the intrinsic properties of the article.

10. The method of claim 8 or claim 9, wherein processing the set of data points comprises deriving a measured class signature from the result of a mathematical transform applied to the data points and comparing the measured class signature to one or more predetermined class signatures, wherein a match between the measured class signature and a predetermined class signature indicates that the article is of the generic type associated with the matched predetermined class signature.

11. The method of any one of claim 8 to 10, further comprising:

measuring the relative position of the coherent elongate beam and the article during the scan; and
linearising the set of data points prior to determining a class signature by using the relative measured position information to modify the set of data points in order to ensure that consecutive data points in the set are equally-spaced with respect to time or position of their acquisition during the scan.

12. The method of any one of claim 8 to 11, further comprising processing the set of data points to determine a characteristic signature from the set of data points, wherein the characteristic signature is for distinguishing individual articles from other articles of the same generic type.

13. The method of any one of claims 8 to 12, wherein the intrinsic properties of the article are imprints imparted to the paper or cardboard during an ordinary manufacturing process.

14. The method of any one of claim 8 to 13, comprising projecting the coherent elongate beam towards the article at near normal incidence.

**Patentansprüche**

1. Vorrichtung (1), die dafür ausgelegt ist, einen aus Papier oder Karton bestehenden Artikel, der in ein Lesevolumen gebracht wird, zu analysieren, umfassend:

einen Scanner, der dafür ausgelegt ist, einen Artikel mit einem kohärenten länglichen optischen Strahl (15), der einen länglichen Fokus aufweist, zu scannen, wobei der Scanner dafür ausgelegt ist, den Artikel linear in einer zu der Hauptachse des länglichen Fokus queren Richtung zu scannen;
eine Detektoranordnung (16), die mehrere Detektoren umfasst, wobei jeder Detektor betreibbar ist, um Lichtsignale anzunehmen, die über einen Bereich gestreut werden, der größer als ein durch den kohärenten länglichen Strahl bereitgestellter Erregungsbereich ist, und jeder Detektor so ausgelegt ist, dass er betreibbar ist, um Lichtsignale zu detektieren, die von im Wesentlichen derselben Position des Lesevolumens gestreut werden, und die Detektoranordnung dafür ausgelegt ist, eine Menge von Datenpunkten aus Signalen zu sammeln, die erhalten werden, wenn der kohärente längliche Strahl von dem Lesevolumen reflektiert wird, wobei sich die Datenpunkte auf Streuung von verschiedenen Teilen des Lesevolumens beziehen und sich verschiedene der Datenpunkte auf Signale beziehen, die zu verschiedenen Zeiten während des Scans erhalten werden; und ein Datenbeschaffungs- und Verarbeitungsmodul (36), das dafür ausgelegt ist, die Menge von Datenpunkten zu verarbeiten, um so zu bestimmen, ob der Artikel eine intrinsische Oberflächenstruktur besitzt, aus der eine vorbestimmte Klassensignatur entsteht, die Artikel eines bekannten generischen Typs aus den intrinsischen Oberflächenstruktureigenschaften des Artikels identifiziert.

2. Vorrichtung nach Anspruch 1, wobei das Datenbeschaffungs- und Verarbeitungsmodul betreibbar ist, um die Menge von Datenpunkten zu analysieren, um zu bestimmen, ob sie Klassensignaturinformationen enthält, die periodische Schwankungen der intrinsischen Eigenschaften des Artikels anzeigen.

3. Vorrichtung nach Anspruch 1 oder Anspruch 2, wobei das Datenbeschaffungs- und Verarbeitungsmodul betreibbar ist, um eine gemessene Klassensignatur aus dem Ergebnis einer auf die Datenpunkte angewandten mathematischen Transformation abzuleiten und die gemessene Klassensignatur mit einer oder mehreren vorbestimmten Klassensignaturen zu vergleichen, wobei eine Übereinstimmung zwischen der gemessenen Klassensignatur und einer vorbestimmten Klassensignatur anzeigt, dass der Artikel von dem mit der übereinstimmenden vorbestimmten Klassensignatur assoziierten generischen Typ ist.

4. Vorrichtung nach einem der vorhergehenden Ansprüche, ferner umfassend:

ein Codierer-/Detektormodul zum Messen der relativen Position des kohärenten länglichen Strahls und des Artikels während des Scans; und wobei das Datenbeschaffungs- und Verarbeitungsmodul ferner betreibbar ist, um die Menge von Datenpunkten zu linearisieren, bevor eine Klassensignatur bestimmt wird, indem aus dem Codierer-/Detektormodul erhaltene relative gemessene Positionsinformationen verwendet werden, um die Menge von Datenpunkten zu modifizieren, um sicherzustellen, dass aufeinanderfolgende Datenpunkte in der Menge mit Bezug auf Zeit oder Position ihrer Beschaffung während des Scans gleichmäßig beabstandet sind.

5. Vorrichtung nach einem der vorhergehenden Ansprüche, wobei das Datenbeschaffungs- und Verarbeitungsmodul ferner betreibbar ist, um eine charakteristische Signatur aus der Menge von Datenpunkten zu bestimmen, wobei die charakteristische Signatur zum Unterscheiden von einzelnen Artikeln von anderen Artikeln desselben generischen Typs dient.

6. Vorrichtung nach einem der vorhergehenden Ansprüche, wobei die intrinsischen Eigenschaften des Artikels Bedruckungen sind, die dem Papier oder Karton während eines gewöhnlichen Herstellungsprozesses verliehen werden.

7. Vorrichtung nach einem der vorhergehenden Ansprüche, wobei der Scanner dafür ausgelegt ist, den kohärenten länglichen Strahl in einem nahezu normalen Einfallswinkel in Richtung des Artikels zu projizieren.

8. Verfahren zum Analysieren eines aus Papier oder Karton bestehenden Artikels, wobei das Verfahren die folgenden Schritte umfasst:

Bringen eines Artikels in ein Lesevolumen; Scannen des Artikels mit einem kohärenten länglichen optischen Strahl (16), der einen länglichen Fokus aufweist, wobei der Artikel in einer zu der Hauptachse des länglichen Fokus queren Richtung linear gescannt wird; Sammeln einer Menge von Datenpunkten unter Verwendung einer Detektoranordnung aus Signalen, die erhalten werden, wenn der kohärente Strahl von dem Lesevolumen reflektiert wird, wobei sich die Datenpunkte auf Streuung von verschiedenen Teilen des Lesevolumens beziehen und sich verschiedene der Datenpunkte auf Signale beziehen, die zu verschiedenen Zeiten während des Scans erhalten werden, wobei die Detektoranordnung mehrere Detektoren umfasst und jeder Detektor Lichtsignale annimmt, die über einen Bereich gestreut werden, der größer als ein durch den kohärenten länglichen Strahl bereitgestellter Erregungsbereich ist, und jeder Detektor so ausgelegt ist, dass er betreibbar ist, um Lichtsignale zu detektieren, die von im Wesentlichen derselben Position des Lesevolumens gestreut werden; und Verarbeiten der Menge von Datenpunkten, um zu bestimmen, ob der Artikel eine intrinsische Oberflächenstruktur besitzt, aus der eine vorbestimmte Klassensignatur entsteht, die Artikel eines bekannten generischen Typs aus den intrinsischen Oberflächenstruktureigenschaften des Artikels identifiziert.

9. Verfahren nach Anspruch 8, wobei das Verarbeiten der Menge von Datenpunkten Folgendes umfasst:

Analysieren der Menge von Datenpunkten, um zu bestimmen, ob sie Klassensignaturinformationen enthält, die periodische Schwankungen der intrinsischen Eigenschaften des Artikels anzeigen.

10. Verfahren nach Anspruch 8 oder Anspruch 9, wobei das Verarbeiten der Menge von Datenpunkten Folgendes umfasst: Ableiten einer gemessenen Klassensignatur aus dem Ergebnis einer auf die Datenpunkte angewandten mathematischen Transformation und Vergleichen der gemessenen Klassensignatur mit einer oder mehreren vorbestimmten Klassensignaturen, wobei eine Übereinstimmung zwischen der gemessenen Klassensignatur und einer vorbestimmten Klassensignatur anzeigt, dass der Artikel von dem mit der übereinstimmenden vorbestimmten Klassensignatur assoziierten generischen Typ ist.

11. Verfahren nach einem der Ansprüche 8 bis 10, ferner mit den folgenden Schritten:

Messen der relativen Position des kohärenten länglichen Strahls und des Artikels während des Scans; und
Linearisieren der Menge von Datenpunkten, bevor eine Klassensignatur bestimmt wird, indem die relativen gemessenen Positionsinformationen verwendet werden, um die Menge von Datenpunkten zu modifizieren, um sicherzustellen, dass aufeinanderfolgende Datenpunkte in der Menge mit Bezug auf Zeit oder Position ihrer Beschaffung während des Scans gleichmäßig beabstandet sind.

12. Verfahren nach einem der Ansprüche 8 bis 11, ferner mit dem Schritt des Verarbeitens der Menge von Datenpunkten, um eine charakteristische Signatur aus der Menge von Datenpunkten zu bestimmen, wobei die charakteristische Signatur zum Unterscheiden von einzelnen Artikeln von anderen Artikeln desselben generischen Typs dient.

13. Verfahren nach einem der Ansprüche 8 bis 12, wobei die intrinsischen Eigenschaften des Artikels Bedruckungen sind, die dem Papier oder Karton während eines gewöhnlichen Herstellungsprozesses verliehen werden.

14. Verfahren nach einem der Ansprüche 8 bis 13 mit dem Schritt des Projizierens des kohärenten länglichen Strahls in Richtung des Artikels in einem nahezu normalen Einfallswinkel.

**Revendications**

1. Appareil (1) agencé pour analyser un article fait de papier ou carton placé dans un volume de lecture, comprenant :

un scanner agencé pour balayer un article avec un faisceau optique allongé cohérent (15) ayant un foyer allongé, le scanner étant agencé pour balayer l'article linéairement dans un sens transversal à l'axe principal du foyer allongé ;
un agencement de détecteurs (16) comprenant une pluralité de détecteurs, chaque détecteur étant exploitable pour accepter des signaux de lumière distribués sur une aire supérieure à une aire d'excitation fournie par le faisceau allongé cohérent et chaque détecteur étant agencé de façon à être exploitable pour détecter des signaux de lumière distribués depuis sensiblement la même position du volume de lecture, et l'agencement de détecteurs étant agencé pour collecter un ensemble de points de données depuis des signaux obtenus quand le faisceau allongé cohérent est réfléchi par le volume de lecture, les points de données se rapportant à la diffusion depuis des parties différentes du volume de lecture et des points différents des points de données se rapportant à des signaux obtenus à des temps différents durant le balayage ; et
un module d'acquisition et de traitement de données (36) agencé pour traiter l'ensemble de points de données de façon à déterminer si l'article possède ou non une structure de surface intrinsèque donnant lieu à une signature de classe prédéterminée qui identifie des articles d'un type générique connu à partir des propriétés de structure de surface intrinsèques de l'article.

2. Appareil selon la revendication 1, dans lequel le module d'acquisition et de traitement de données est exploitable pour analyser l'ensemble de points de données pour déterminer s'il contient ou non des informations de signature de classe indicatives de variations périodiques des propriétés intrinsèques de l'article.

3. Appareil selon la revendication 1 ou la revendication 2, dans lequel le module d'acquisition et de traitement de données est exploitable pour dériver une signature de classe mesurée du résultat d'une transformée mathématique appliquée aux points de données et comparer la signature de classe mesurée à une ou plusieurs signatures de classe prédéterminées, dans lequel une correspondance entre la signature de classe mesurée et une signature de classe prédéterminée indique que l'article est du type générique associé à la signature de classe prédéterminée correspondante.

4. Appareil selon l'une quelconque des revendications précédentes, comprenant en outre :

un module de codeur/détecteur pour mesurer la position relative du faisceau allongé cohérent et de l'article durant le balayage ; et

dans lequel le module d'acquisition et de traitement de données est exploitable en outre pour linéariser l'ensemble de points de données avant de déterminer une signature de classe en utilisant des informations de position mesurée relative obtenues du module de codeur/détecteur pour modifier l'ensemble de points de données afin de garantir que des points de données consécutifs dans l'ensemble sont équidistants par rapport au temps ou à la position de leur acquisition durant le balayage.

5. Appareil selon l'une quelconque des revendications précédentes, dans lequel le module d'acquisition et de traitement de données est exploitable en outre pour déterminer une signature caractéristique à partir de l'ensemble de points de données, la signature caractéristique servant à distinguer des articles individuels d'autres articles du même type générique.

6. Appareil selon l'une quelconque des revendications précédentes, dans lequel les propriétés intrinsèques de l'article sont des empreintes conférées au papier ou carton durant un processus de fabrication ordinaire.

7. Appareil selon l'une quelconque des revendications précédentes, dans lequel le scanner est configuré pour projeter le faisceau allongé cohérent vers l'article à une incidence presque normale.

8. Procédé d'analyse d'un article réalisé en papier ou carton, le procédé comprenant :

le placement d'un article dans un volume de lecture ;

le balayage de l'article avec un faisceau optique allongé cohérent (16) ayant un foyer allongé, l'article étant balayé linéairement dans un sens transversal à l'axe principal du foyer allongé ;

la collecte, par un agencement de détecteurs, d'un ensemble de points de données depuis des signaux obtenus quand le faisceau cohérent est réfléchi par le volume de lecture, les points de données se rapportant à la diffusion depuis des parties différentes du volume de lecture et des points différents des points de données se rapportant à des signaux obtenus à des temps différents durant le balayage, l'agencement de détecteurs comprenant une pluralité de détecteurs, chaque détecteur acceptant des signaux de lumière distribués sur une aire supérieure à une aire d'excitation fournie par le faisceau allongé cohérent et chaque détecteur étant agencé de façon à être exploitable pour détecter des signaux de lumière distribués depuis sensiblement la même position du volume de lecture ; et le traitement de l'ensemble de point de données pour déterminer si l'article possède ou non une structure de surface intrinsèque donnant lieu à une signature de classe prédéterminée qui identifie des articles d'un type générique connu à partir des propriétés de structure de surface intrinsèques de l'article.

9. Procédé selon la revendication 8, dans lequel le traitement de l'ensemble de points de données comprend l'analyse de l'ensemble de points de données pour déterminer s'il contient ou non des informations de signature de classe indicatives de variations périodiques des propriétés intrinsèques de l'article.

10. Procédé selon la revendication 8 ou la revendication 9, dans lequel le traitement de l'ensemble de points de données comprend la dérivée d'une signature de classe mesurée à partir du résultat d'une transformée mathématique appliquée aux points de données et la comparaison de la signature de classe mesurée à une ou plusieurs signatures de classe prédéterminées, dans lequel une correspondance entre la signature de classe mesurée et une signature de classe prédéterminée indique que l'article est du type générique associé à la signature de classe prédéterminée correspondante.

11. Procédé selon l'une quelconque des revendications 8 à 10, comprenant en outre :

la mesure de la position relative du faisceau allongé cohérent et de l'article durant le balayage ; et

la linéarisation de l'ensemble de points de données avant de déterminer une signature de classe en utilisant les informations de position mesurée relative pour modifier l'ensemble de points de données afin de garantir que des points de données consécutifs dans l'ensemble sont équidistants par rapport au temps ou à la position de leur acquisition durant le balayage.

12. Procédé selon l'une quelconque des revendications 8 à 11, comprenant en outre le traitement de l'ensemble de points de données pour déterminer une signature caractéristique à partir de l'ensemble de points de données, la signature caractéristique servant à distinguer des articles individuels d'autres articles du même type générique.

13. Procédé selon l'une quelconque des revendications 8 à 12, dans lequel les propriétés intrinsèques de l'article sont des empreintes conférées au papier ou carton durant un processus de fabrication ordinaire.

**14.** Procédé selon l'une quelconque des revendications 8 à 13, comprenant la projection du faisceau allongé cohérent vers l'article à une incidence presque normale.

Fig. 1

Fig. 2

Fig. 3

Z

y

x

42

10

12

1

Fig. 4

Fig. 5

Fig. 6A

Fig. 6B

Fig. 7A

Fig. 7B

Fig. 8A

Fig. 8B

START SCAN — A1

ACQUIRE DATA — A2

RETURN SCAN HEAD — A3

LINEARISE DATA — A4

FOURIER TRANSFORM DATA — A5

FIND FOURIER TRANSFORM PEAK DATA POINT — A6

CALCULATE PEAK WAVELENGTH — A7

AUTHENTIC ? — A8

N

STORE CLASS SIGNATURE — A9

Y

VERIFY CLASS SIGNATURE — A10

Fig. 9

Fig. 10A

Fig. 10B

Fig. 10C

```
              ┌──────────────────┐
              │    START SCAN    │
              └──────────────────┘
                       │
                       ▼
S1   ┌──────────────────────────────┐
     │      SCAN TO ACQUIRE DATA     │
     └──────────────────────────────┘
                       │
                       ▼
S2   ┌──────────────────────────────┐
     │        LINEARISE DATA         │
     └──────────────────────────────┘
                       │
                       ▼
S3   ┌──────────────────────────────┐
     │     DIFFERENTIATE & SMOOTH    │
     └──────────────────────────────┘
                       │
                       ▼
S4   ┌──────────────────────────────┐
     │   COMPUTE AND SUBTRACT MEAN   │
     └──────────────────────────────┘
                       │
                       ▼
S5   ┌──────────────────────────────┐
     │       DIGITISE TO OBTAIN      │
     │       DIGITAL SIGNATURE       │
     └──────────────────────────────┘
                       │
                       ▼
S6   ┌──────────────────────────────┐
     │  DIGITISE TO OBTAIN THUMBNAIL │
     │       DIGITAL SIGNATURE       │
     └──────────────────────────────┘
                       │
                       ▼
S7   ┌──────────────────────────────┐
     │    COMPUTE CROSS-CORRELATION  │
     │         COEFFICIENTS          │
     └──────────────────────────────┘
                       │
                       ▼
S8   ┌──────────────────────────────┐
     │       COMPUTE AVERAGE         │
     │           VALUES              │
     └──────────────────────────────┘
                       │
                       ▼
              ┌──────────────────┐
              │     END SCAN     │
              └──────────────────┘
```

Fig. 11

Fig. 12

Fig. 13B

Fig. 13A

START SCAN — R1

↓

ACQUIRE DATA — R2

↓

RETURN SCAN HEAD — R3

↓

LINEARISE DATA — R4

↓

SET $i_0 = 0$ — R5

↓

DEFINE SUBSETS — R6

↓

FOURIER TRANSFORM DATA — R7

↓

FIND FOURIER TRANSFORM PEAK DATA POINT — R8

↓

CALCULATE RMS VALUE — R9

B          A

Fig. 14A

(B)                    (A)

FIND RATIO ── R10

INCREMENT ── R11

LOOP UNTIL $i_0=N$ ── R12

FIND GLOBAL PEAK DATA POINT ── R13

CALCULATE PEAK WAVELENGTH ── R14

AUTHENTIC ? ── R15

N

STORE CLASS SIGNATURE ── R16

Y

VERIFY CLASS SIGNATURE ── R17

Fig. 14B

START — A1

↓

POSITION ARTICLE — A2

↓

SCAN ARTICLE ←→ MEASURE SCAN POSITION

A3         A5         A4

COLLECT DATA POINTS — A5

↓

LINEARISE DATA — A6

↓

TRANSFORM DATA — A7

↓

DETERMINE CLASS SIGNATURE — A8

↓

COMPARE TO PREDETERMINED CLASS SIGNATURES — A9

↓

A10 — RECOGNISED ? — Y → DETERMINE CHARACTERISTIC SIGNATURE — A12

↓ N         A13 ↓

REJECT ARTICLE ← N — RECOGNISED ?

A11         Y ↓

ARTICLE IDENTIFIED AND VALIDATED — A14

Fig. 15

Fig. 16A

Fig. 16B

Fig. 16C

Fig. 16D

Fig. 16E

Fig. 16F

Fig. 16G

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1587030 A1
- WO 2004066207 A1
- WO 0045344 A
- EP 1418542 A1
- EP 1273461 A2
- EP 0278058 A
- US 5521984 A
- US 5325167 A
- GB 0405641 A
- US 4564051 A
- US 6546964 B
- US 4546964 A
- US 5152326 A
- US 5358014 A
- US 200410011491 A
- WO 2004020734 A

**Non-patent literature cited in the description**

- **KRAVOLEC.** Plastic tag makes foolproof ID. *Technology Research News,* 02 October 2002
- **R ANDERSON.** Security Engineering: a guide to building dependable distributed systems. Wiley, 2001, 251-252